(19) **Europäisches Patentamt / European Patent Office / Office européen des brevets**

(11) **EP 4 451 391 A1**

(12) # EUROPEAN PATENT APPLICATION
published in accordance with Art. 153(4) EPC

(43) Date of publication:
**23.10.2024 Bulletin 2024/43**

(21) Application number: **23915188.9**

(22) Date of filing: **16.01.2023**

(51) International Patent Classification (IPC):
**H01M 4/66** (2006.01)

(52) Cooperative Patent Classification (CPC):
**H01M 4/667; H01M 4/66; H01M 4/661; H01M 4/668; H01M 4/70; H01M 10/052;** Y02E 60/10

(86) International application number:
**PCT/CN2023/072363**

(87) International publication number:
**WO 2024/152152 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central, Central And Western District (HK)**

(72) Inventors:
- **LI, Mingling**
  **Ningde, Fujian 352100 (CN)**

- **LIU, Xin**
  **Ningde, Fujian 352100 (CN)**
- **HUANG, Qisen**
  **Ningde, Fujian 352100 (CN)**
- **LIU, Xianghui**
  **Ningde, Fujian 352100 (CN)**
- **LI, Cheng**
  **Ningde, Fujian 352100 (CN)**

(74) Representative: **Gong, Jinping**
**CocreateIP**
**Neumarkterstr. 21**
**81673 München (DE)**

(54) **COMPOSITE CURRENT COLLECTOR, SECONDARY BATTERY AND ELECTRICAL APPARATUS**

(57)     This application relates to a composite current collector including a first metal layer, a second metal layer, and a first binding layer, where the first metal layer includes a first body zone and a first tab zone, the first tab zone being located at an end of the first metal layer; the second metal layer includes a second body zone and a second tab zone, the second tab zone being located at an end of the second metal layer; the first body zone and the second body zone are connected through the first binding layer; the first tab zone has a thickness greater than thickness of the first body zone; and the first tab zone extends toward the second tab zone. This application also relates to the corresponding secondary battery and electric apparatus. The composite current collector has a good current flow capacity, enabling the battery to have a high energy density and good safety performance.

FIG. 1

## Description

### TECHNICAL FIELD

This application relates to the field of secondary battery technologies, and in particular, to a composite current collector, a secondary battery, and an electric apparatus.

### BACKGROUND

In recent years, secondary batteries have been in increasingly wide use. Secondary batteries are widely used in energy storage power supply systems such as hydroelectric power plants, thermal power plants, wind power plants, and solar power plants, and many other fields including electric tools, electric bicycles, electric motorcycles, electric vehicles, military equipment, and aerospace. Along with the great development of secondary batteries, higher requirements are imposed on the current flow capacity of the tabs, energy density, and safety of the secondary batteries.

For a composite current collector of a conventional secondary battery, the tab needs to be welded to the metal layer of the current collector through an extra welding process. The addition of the welding process not only introduces additional manufacturing costs but also requires the introduction of additional metal foils, which leads to a decrease in the energy density of the battery. Moreover, the welding process easily leads to welding defects, such as poor welding.

Therefore, one of the key focuses for persons skilled in the art is to seek a composite current collector that can enhance the current flow capacity while maintaining high energy density and good safety performance.

### SUMMARY

This application is made in view of the foregoing issue, and one of its purposes is to provide a composite current collector having a specific structure that can enhance the current flow capacity of the tab while allowing the battery to have a high energy density and good safety performance.

To achieve the foregoing purpose, a first aspect of this application provides a composite current collector including a first metal layer, a second metal layer, and a first binding layer, where the first metal layer includes a first body zone and a first tab zone, the first tab zone being located at an end of the first metal layer; the second metal layer includes a second body zone and a second tab zone, the second tab zone being located at an end of the second metal layer; the first body zone and the second body zone are connected through the first binding layer; the first tab zone has a thickness greater than thickness of the first body zone; and the first tab zone extends toward the second tab zone.

In the composite current collector of this application, through the formation of the first tab zone at the end of the first metal layer and the formation of the second tab zone at the end of the second metal layer, the first body zone and the second body zone are connected through the first binding layer, the first tab zone has a thickness greater than the thickness of the first body zone, and the first tab zone extends toward the second tab zone. The first tab zone and the second tab zone of the composite current collector can be directly welded as tabs without the need for an indirect welding process. In addition, as the conductivity of the tabs is enhanced, the problem of insufficient current flow capacity at the welded joints of the tabs is solved. Moreover, only the first tab zone is thickened, and thickening of the first body zone is not required, which enables the battery to pass the needle penetration test and is conducive to improving the safety and energy density of the battery.

In any embodiment, a first groove is provided at an end of the first tab zone extending toward the second tab zone, the first groove extending from one side of the first tab zone close to the first body zone to another side. In this way, a stepped gap can be formed between the first tab zone and the second tab zone, and a stepped binding layer can be formed after the filling of a binder.

In any embodiment, the second tab zone has a thickness greater than thickness of the second body zone and the second tab zone extends toward the first tab zone. As a result, the first tab zone and the second tab zone are provided extending toward each other, which can significantly increase the current flow capacity of the tabs.

In any embodiment, a second groove is provided at an end of the second tab zone extending toward the first tab zone, the second groove extending from one side of the second tab zone close to the second body zone to another side. This further facilitates the formation of a stepped gap between the first tab zone and the second tab zone.

In any embodiment, a second binding layer is provided between the first tab zone and the second tab zone, the second binding layer at least partially filling the gap between the first tab zone and the second tab zone. This can improve the stability of the first tab zone and the second tab zone, preventing the occurrence of cracks and breaks in the first tab zone and the second tab zone during subsequent cold pressing processes. On one hand, the second binding layer provides support to the first tab zone and the second tab zone, and on the other hand, it does not affect the effectiveness of direct welding. During direct welding, the portions of the tab zones without the second binding layer can be directly welded, while at the locations with the second binding layer, the second binding layer can diffuse toward the vacant space, enabling electrical conductivity between the first tab zone and the second tab zone through welding.

In any embodiment, a second binding layer is provided between the first tab zone and the second tab zone, the second binding layer at least partially filling the gap between the first tab zone and the second tab zone, and thickness of the second binding layer at the first groove and/or the second groove is greater than thickness of the second binding layer at other parts. This can provide better support for the first tab zone and the second tab zone.

In any embodiment, the second binding layer has a thickness of 0.5 $\mu$m to 5 $\mu$m at the first groove and/or the second groove; and optionally, the second binding layer has a thickness of 0.5 $\mu$m to 3 $\mu$m at the first groove and/or the second groove. The thickness is not excessively large, which can enhance the effectiveness of direct welding of the tabs.

In any embodiment, the thickness of the second binding layer at other parts is less than 0.5 $\mu$m. Through the controlling of the thickness of the second binding layer at parts other than the first groove and the second groove to be less than 0.5 $\mu$m, the second binding layer in those parts can be directly penetrated during ultrasonic welding without affecting the welding effectiveness.

In any embodiment, a ratio of total thickness of the first tab zone and the second tab zone to the thickness of the second binding layer at the first groove and/or the second groove is greater than or equal to 2; and optionally, the ratio of the total thickness of the first tab zone and the second tab zone to the thickness of the second binding layer at the first groove and/or the second groove is 2 to 20. This can likewise ensure the effectiveness of the ultrasonic welding, without causing a significant decrease in energy density.

In any embodiment, a ratio of width of the first groove to width of the first tab zone is 0.05 to 0.5; a ratio of width of the second binding layer at the first groove to width of the first tab zone is 0.05 to 0.5; a ratio of width of the second groove to width of the second tab zone is 0.05 to 0.5; or a ratio of width of the second binding layer at the second groove to width of the second tab zone is 0.05 to 0.5. In this way, a good support can be formed for the tab zones without affecting the effectiveness of direct welding.

In any embodiment, the side of the second tab zone close to the second body zone is in contact with the first binding layer. In this way, the side wall of the second tab zone is also supported by the first binding layer, and in particular, the root position of the second tab zone is supported by the first binding layer. This prevents damage to the root during subsequent processes such as cold pressing, ensuring that the conductivity of the tabs of the battery is not compromised and avoiding deterioration of battery performance.

In any embodiment, the first tab zone is connected to the second tab zone. As a result, direct connection between the first tab zone and the second tab zone can be achieved, creating an electrically conductive state. This makes the first tab zone and the second tab zone exhibit the same characteristics as the tab of a normal metal foil. This can better improve the performance, the current flow capacity of the tabs, and the fast charging capability of the battery. Additionally, this allows for direct ultrasonic welding, eliminating the need for an indirect welding process.

In any embodiment, the second binding layer is connected to the first binding layer. This can further improve the stability at the junction and the resistance to cracking at the root of the first tab zone and the second tab zone during the cold pressing process, thereby improving the battery performance.

In any embodiment, the side of the first tab zone close to the first body zone is in contact with the first binding layer. In this way, the side wall of the first tab zone is also supported by the first binding layer, and in particular, the root position of the first tab zone is supported by the first binding layer. This prevents damage to the root during subsequent processes such as cold pressing, ensuring that the conductivity of the tabs of the battery is not compromised and avoiding deterioration of battery performance.

In any embodiment, the first metal layer includes a plurality of first body zones, the plurality of first body zones being separated by third tab zones; the second metal layer includes a plurality of second body zones, the plurality of second body zones being separated by fourth tab zones; and the third tab zone has a thickness greater than the thickness of the first body zone, and the third tab zone extends toward the fourth tab zone. As a result, more than three tab welding regions can be formed on one first metal layer and second metal layer, creating a battery structure with more tabs.

In any embodiment, the fourth tab zone has a thickness greater than the thickness of the second body zone and the fourth tab zone extends toward the third tab zone. As a result, the third tab zone and the fourth tab zone are provided extending toward each other, which can significantly increase the current flow capacity of the tabs.

In any embodiment, a side wall of the fourth tab zone is in contact with the first binding layer. In this way, the side wall of the fourth tab zone is also supported by the first binding layer, and in particular, the root position of the fourth tab zone is supported by the first binding layer. This prevents damage to the root during subsequent processes such as cold pressing, ensuring that the conductivity of the tabs of the battery is not compromised and avoiding deterioration of battery performance.

In any embodiment, the third tab zone is connected to the fourth tab zone. As a result, direct connection and conductivity between the third tab zone and the fourth tab zone can be achieved, creating an electrically conductive state. This makes the third tab zone and the fourth tab zone exhibit the same characteristics as the tab of a normal metal foil. This can better improve the performance, the current flow capacity of the tabs, and the fast charging capability of the battery. Additionally, this allows for direct ultrasonic welding, eliminating the need for an indirect welding process.

In any embodiment, a third binding layer is provided between the third tab zone and the fourth tab zone, the third binding layer at least partially filling a gap between the third tab zone and the fourth tab zone. This can improve the stability of the third tab zone and the fourth tab zone, preventing the occurrence of cracks and breaks in the third tab zone and the fourth tab zone during subsequent cold pressing processes. On one hand, the third binding layer provides support to the third tab zone and the fourth tab zone, and on the other hand, it does not affect the effectiveness of direct welding. During direct welding, the portions of the tab zones without the third binding layer can be directly welded, while at the locations with the third binding layer, the third binding layer can diffuse toward the vacant space, enabling electrical conductivity between the third tab zone and the fourth tab zone through welding.

In any embodiment, the third binding layer partially fills the gap between the third tab zone and the fourth tab zone. This facilitates processing of the third tab zone and the fourth tab zone as tabs through direct welding.

In any embodiment, the third binding layer is connected to the first binding layer. This can further improve the stability at the junction and the resistance to cracking at the root of the third tab zone and the fourth tab zone during the cold pressing process, thereby improving the battery performance.

In any embodiment, a side wall of the third tab zone is in contact with the first binding layer. In this way, the side wall of the third tab zone is also supported by the first binding layer, and in particular, the root position of the third tab zone is supported by the first binding layer. This prevents damage to the root during subsequent processes such as cold pressing, ensuring that the conductivity of the tabs of the battery is not compromised and avoiding deterioration of battery performance.

In any embodiment, thickness of the third binding layer is 0.5 $\mu$m to 5 $\mu$m; and optionally, thickness of the third binding layer is 0.5 $\mu$m to 3 $\mu$m.

In any embodiment, a sum of thicknesses of the first tab zone and the second tab zone is greater than or equal to 7 $\mu$m. The sum of thicknesses of the first tab zone and the second tab zone being greater than or equal to 7 $\mu$m can facilitate direct ultrasonic welding, better ensuring the conductivity performance of the tab zone.

In any embodiment, the sum of thicknesses of the first tab zone and the second tab zone is 7 $\mu$m to 15 $\mu$m. The sum of thicknesses of the first tab zone and second tab zone being within the foregoing range can facilitate ultrasonic welding and improve the conductivity performance without reducing the energy density. If the sum of thicknesses of the first tab zone and the second tab zone is too large, this cannot significantly improve the conductivity performance, but may reduce the energy density.

In any embodiment, a sum of thicknesses of the third tab zone and the fourth tab zone is greater than or equal to 7 $\mu$m. The sum of thicknesses of the third tab zone and the fourth tab zone being greater than or equal to 7 $\mu$m can likewise facilitate direct ultrasonic welding, better ensuring the conductivity performance of the tab zone.

In any embodiment, a sum of thicknesses of the third tab zone and the fourth tab zone is 7 $\mu$m to 15 $\mu$m. The sum of thicknesses of the third tab zone and the fourth tab zone being within the foregoing range can facilitate ultrasonic welding and improve the conductivity performance without reducing the energy density. If the sum of thicknesses of the third tab zone and the fourth tab zone is too large, this cannot significantly improve the conductivity performance, but may reduce the energy density.

In any embodiment, the sum of thicknesses of the first tab zone and the second tab zone is 5 $\mu$m to 13 $\mu$m greater than the sum of thicknesses of the first body zone and the second body zone. In this way, the thickening of the first tab zone and the second tab zone can enhance the current flow capacity of the composite current collector and improve the fast charging performance. In addition, the first body zone and the second body zone are relatively thinner, which allows the battery to pass the needle penetration test, and improves the safety performance of the battery. Furthermore, reducing the total thickness of the first body zone and the second body zone can also improve the energy density of the battery. The total thickness of the first tab zone and the second tab zone should not be excessively thick. Excessive thickness does not significantly improve the fast charging performance and may reduce the energy density.

In any embodiment, the sum of thicknesses of the third tab zone and the fourth tab zone is 5 $\mu$m to 13 $\mu$m greater than the sum of thicknesses of the first body zone and the second body zone. Similarly, the thickening of the third tab zone and the fourth tab zone can enhance the current flow capacity of the composite current collector and improve the fast charging performance. The first body zone and the second body zone are relatively thinner, which allows the battery to pass the needle penetration test, and improves the safety performance of the battery. Furthermore, reducing the thickness of the first body zone and the second body zone can also improve the energy density of the battery.

In any embodiment, the first binding layer contains one or more of a particulate material and a conductive agent. The particulate material contained in the first binding layer can effectively improve the support function of the first binding layer; and the conductive agent contained in the first binding layer can effectively improve the conductivity performance of the first binding layer.

In any embodiment, the second binding layer and/or the third binding layer may also contain one or more of the foregoing particulate material and conductive agent. Similarly, they can improve the support function and conductivity performance of the second binding layer and the third binding layer, respectively.

In any embodiment, the particulate material includes one or more of inorganic compound particles and metal particles.

In any embodiment, the inorganic compound particles include one or more of alumina, silicon carbide, silicon nitride, silicon oxide, calcium oxide, boehmite, titanium dioxide, zirconium dioxide, magnesium oxide, zinc oxide, barium sulfate, and boron carbide.

In any embodiment, the metal particles include an alloy of at least one or more of Cu, Al, Ni, Ti, Pt, Fe, Au, Co, Cr, W, Mo, Mg, Pb, In, and Sn.

In any embodiment, the conductive agent includes one or more of carbon nanotubes, conductive carbon, graphene, and conductive polymers.

In any embodiment, a sum of the mass percentages of the particulate material and conductive agent in the first binding layer is 20% to 70%.

In any embodiment, the binder in the first binding layer includes one or more of polyamide, polyimide, polyethylene terephthalate, polybutylene terephthalate, polyethylene naphthalate, polycarbonate, polyethylene, carboxylic acid and its derivative graft polyethylene, polypropylene, carboxylic acid and its derivative graft polypropylene, polypropylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polymethyl methacrylate, polyethylene glycol, polysulfide nitride, polyphenylene, polypyrrole, polyaniline, polythiophene, polypyridine, cellulose, starch, protein, epoxy resin, polypyrrole, polythiophene, polyaniline, and phenolic resin.

In any embodiment, the binder in the first binding layer may alternatively be a derivative, crosslinked product, or copolymer of the foregoing binders.

In any embodiment, both the first metal layer and the second metal layer include at least one or an alloy of Cu, Al, Ni, Ti, Pt, Fe, Au, Co, Cr, W, Mo, Mg, Pb, In, and Sn.

A second aspect of this application provides a secondary battery including the composite current collector according to the first aspect of this application. As a result, the secondary battery has a good current flow capacity, high energy density, and good safety performance.

A third aspect of this application provides an electric apparatus including the secondary battery according to the second aspect of this application.

In the composite current collector of this application, through the formation of the first tab zone at the end of the first metal layer and the formation of the second tab zone at the end of the second metal layer, the first body zone and the second body zone are connected through the first binding layer, the first tab zone has a thickness greater than the thickness of the first body zone, and the first tab zone extends toward the second tab zone. The first tab zone and the second tab zone of the composite current collector can be directly welded as tabs without the need for an indirect welding process. In addition, as the conductivity of the tabs is enhanced, the problem of insufficient current flow capacity at the welded joints of the tabs is solved. Moreover, only the first tab zone is thickened, and thickening of the first body zone is not required, which enables the battery to pass the needle penetration test and is conducive to improving the safety and energy density of the battery.

**BRIEF DESCRIPTION OF DRAWINGS**

Reference may be made to one or more of the accompanying drawings for the purpose of better describing and illustrating those embodiments and/or examples of this application. The additional details or examples used to describe the accompanying drawings should not be considered limitations on the scope of any one of the disclosed application, the currently described embodiments and/or examples, and the best mode of this application as currently understood.

FIG. 1 is a schematic diagram of a composite current collector according to an embodiment of this application;
FIG. 2 is a schematic diagram of a composite current collector according to another embodiment of this application;
FIG. 3 is a schematic diagram of a composite current collector according to another embodiment of this application;
FIG. 4 is a schematic diagram of a composite current collector according to another embodiment of this application;
FIG. 5 is a schematic diagram of a composite current collector according to another embodiment of this application;
FIG. 6 is a schematic diagram of a composite current collector according to another embodiment of this application;
FIG. 7 is a schematic diagram of a composite current collector according to another embodiment of this application;
FIG. 8 is a schematic diagram of a composite current collector according to another embodiment of this application;
FIG. 9 is a schematic diagram of a composite current collector according to another embodiment of this application;
FIG. 10 is a schematic diagram of a composite current collector according to another embodiment of this application;
FIG. 11 is a schematic diagram of a composite current collector according to another embodiment of this application;
FIG. 12 is a schematic diagram of a composite current collector according to another embodiment of this application;

FIG. 13 is a schematic diagram of a composite current collector according to another embodiment of this application;
FIG. 14 is a schematic diagram of a composite current collector according to another embodiment of this application;
FIG. 15 is a schematic diagram of a secondary battery according to an embodiment of this application;
FIG. 16 is an exploded view of the secondary battery according to the embodiment of this application in FIG. 15; and
FIG. 17 is a schematic diagram of an electric apparatus using a secondary battery as a power source according to an embodiment of this application.

Description of reference signs:
1. first metal layer; 2. second metal layer; 3. first binding layer; 4. first groove; 5. secondary battery; 6. electric apparatus; 7. second groove; 8. second binding layer; 9. third binding layer; 10. particulate material; 11. first body zone; 12. first tab zone; 13. third tab zone; 14. conductive agent; 21. second body zone; 22. second tab zone; 23. fourth tab zone; 51. housing; 52. electrode assembly; 53. cover plate; and 100. composite current collector.

## DESCRIPTION OF EMBODIMENTS

The following specifically discloses in detail embodiments of the separator, secondary battery, and electrical apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

At present, along with the great development of secondary batteries, higher requirements are imposed on the current flow capacity, energy density, safety performance, and the like of secondary batteries. High-performance secondary batteries have high requirements for composite current collectors. Therefore, one of the key focuses for persons skilled in the art is to seek for a composite current collector with better performance. For a conventional composite current collector, the tab needs to be welded to the metal layer of the current collector through an extra indirect welding process. This not only introduces additional manufacturing costs, but also requires the introduction of additional metal foils, which leads to a decrease in the energy density of the battery. Moreover, this easily leads to welding defects, such as poor welding. Furthermore, in traditional composite current collectors, thickness of a metal foil in the electrode plate zone is the same as thickness of a metal foil in the tab zone, which limits the current flow capacity of the current collector and affects the fast charging performance of the cell. To improve the current flow capacity, the overall thickness of the metal layer of the composite current collector needs to be increased. However, this will lead to a decrease in the safety of the battery and will also reduce the energy density of the battery. The inventors have found through research a composite current collector with a special structure that can improve the current flow capacity while enabling the battery to have high energy density and good safety.

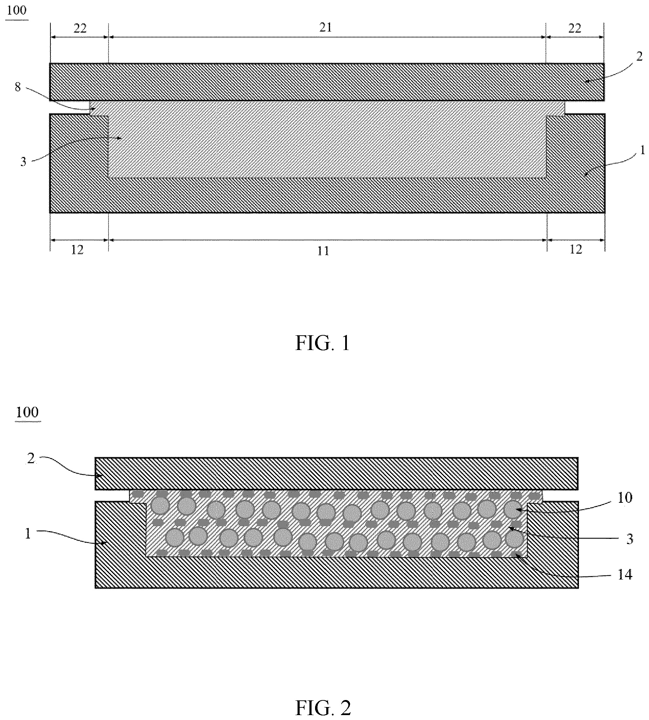

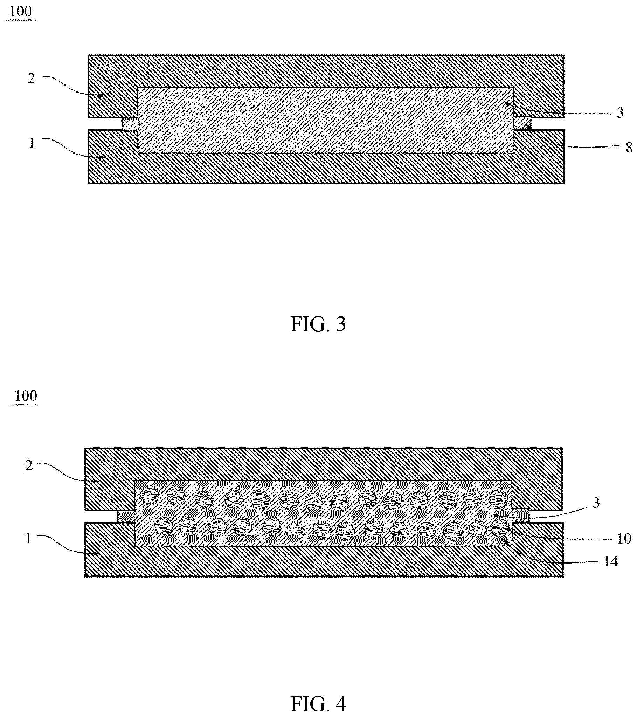

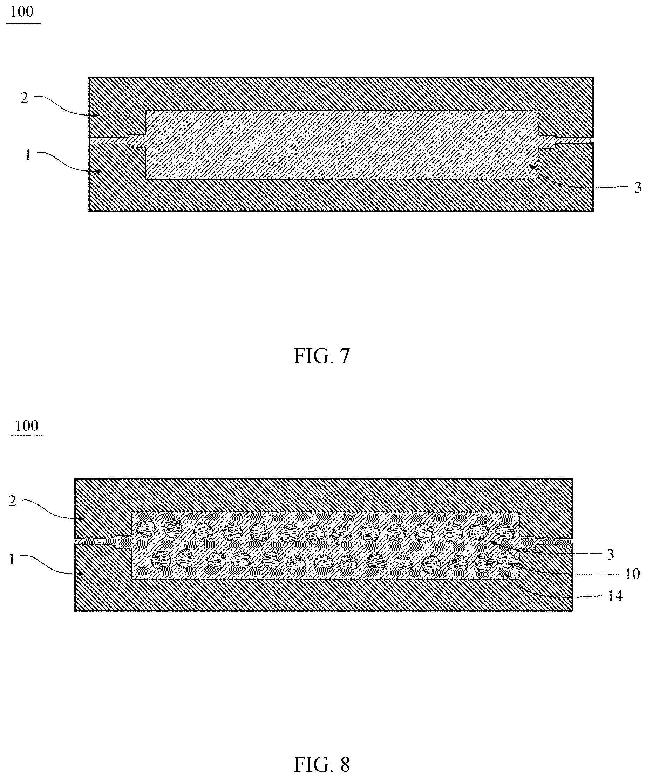

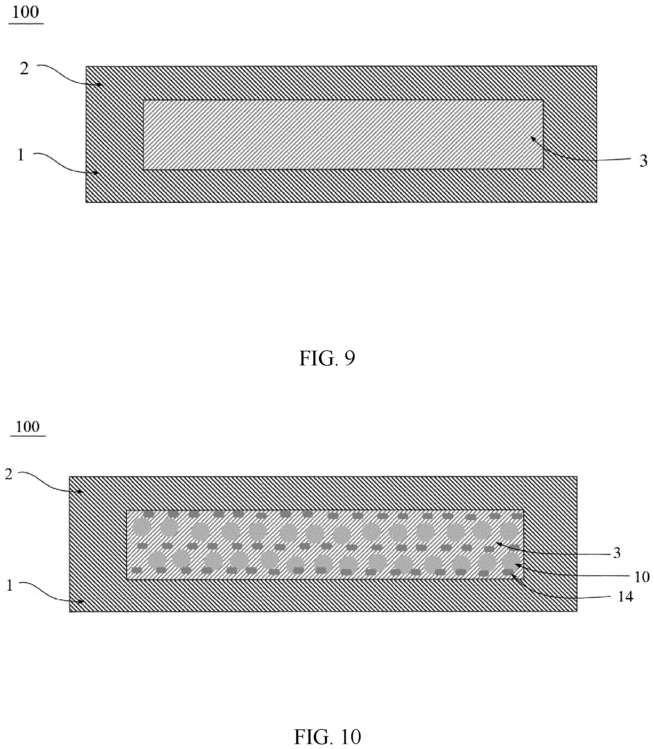

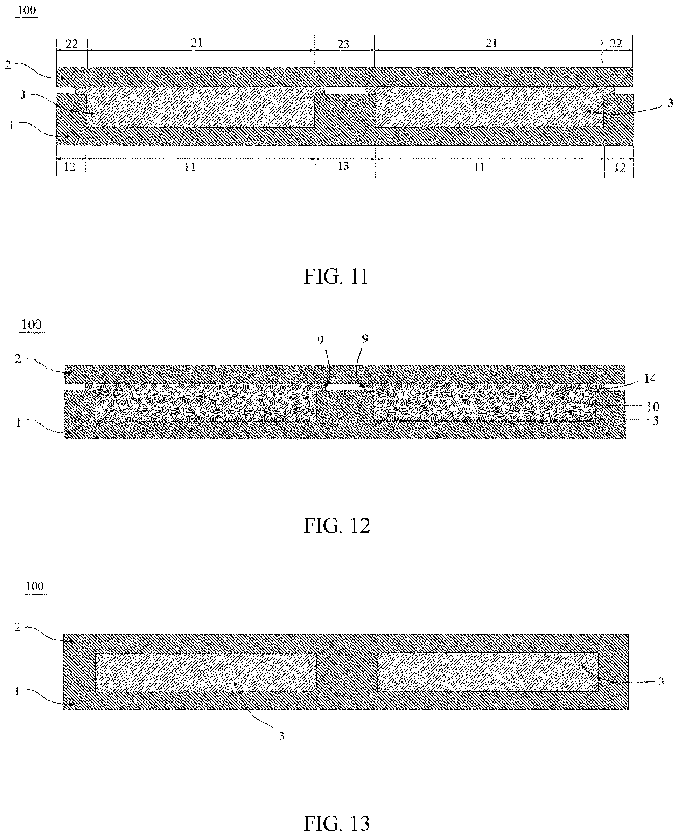

Referring to FIGs. 1 to 14, in some embodiments, a first aspect of this application provides a composite current collector 100 including a first metal layer 1, a second metal layer 2, and a first binding layer 3, where the first metal layer 1 includes a first body zone 11 and a first tab zone 12, the first tab zone 12 being located at an end of the first metal layer 1; the second metal layer 2 includes a second body zone 21 and a second tab zone 22, the second tab zone 22 being located at an end of the second metal layer 2; the first body zone 11 and the second body zone 21 are connected through the first binding layer 3; the first tab zone 12 has a thickness greater than thickness of the first body zone 11; and the first tab zone 12 extends toward the second tab zone 22.

In the composite current collector 100 of this application, through the formation of the first tab zone 12 at the end of the first metal layer 1 and the formation of the second tab zone 22 at the end of the second metal layer 2, the first body zone 11 and the second body zone 21 are connected through the first binding layer 3, the first tab zone 12 has a thickness greater than the thickness of the first body zone 11, and the first tab zone 12 extends toward the second tab zone 22. The first tab zone 12 and the second tab zone 22 of the composite current collector 100 can be directly welded as tabs without the need for an indirect welding process. In addition, as the conductivity of the tabs is enhanced, the problem of insufficient current flow capacity at the welded joints of the tabs is solved. Moreover, only the first tab zone 12 is thickened, and thickening of the first body zone 11 is not required, which enables the battery to pass the needle penetration test and is conducive to improving the safety and energy density of the battery.

It should be understood that in the composite current collector 100 of this application, the first body zone 11 and the second body zone 21 are connected through the first binding layer 3, and the first tab zone 12 and the second tab zone 22 are formed in a region protruding from the first binding layer 3.

In some embodiments, the second tab zone 22 has a thickness greater than thickness of the second body zone 21 and the second tab zone 22 extends toward the first tab zone 12. As a result, the first tab zone 12 and the second tab zone 22 are provided extending toward each other, which can significantly increase the current flow capacity of the tabs.

In some embodiments, a first groove 4 is provided at an end of the first tab zone 12 extending toward the second tab zone 22, the first groove 4 extending from one side of the first tab zone 12 close to the first body zone 11 to another side. In this way, a stepped gap can be formed between the first tab zone 12 and the second tab zone 22, and a stepped binding layer can be formed after the filling of a binder, providing better support for the tab zones.

In some embodiments, a second groove 7 is provided at an end of the second tab zone 22 extending toward the first tab zone 12, the second groove 7 extending from one side of the second tab zone 22 close to the second body zone 21 to another side. This further facilitates the formation of a stepped gap between the first tab zone 12 and the second tab zone 22. After being filled with a binder, the stepped gap can provide better support for the tab zones.

In some embodiments, a second binding layer 8 is provided between the first tab zone 12 and the second tab zone 22, the second binding layer 8 at least partially filling the gap between the first tab zone 12 and the second tab zone 22. This can improve the stability of the first tab zone 12 and the second tab zone 22, preventing the occurrence of cracks and breaks in the first tab zone 12 and the second tab zone 22 during subsequent cold pressing processes. On one hand, the second binding layer 8 provides support to the first tab zone 12 and the second tab zone 22, and on the other hand, it does not affect the effectiveness of direct welding. During direct welding, the portions of the tab zones without the second binding layer 8 can be directly welded, while at the locations with the second binding layer 8, the second binding layer 8 can diffuse toward the vacant space, enabling electrical conductivity between the first tab zone 12 and the second tab zone 22 through welding.

It should be understood that the second binding layer 8 may entirely fill the gap between the first tab zone 12 and the second tab zone 22; or it may only partially fill the gap between the first tab zone 12 and the second tab zone 22.

In some embodiments, the second binding layer 8 partially fills the gap between the first tab zone 12 and the second tab zone 22. This facilitates processing of the first tab zone 12 and the second tab zone 22 as tabs through direct welding.

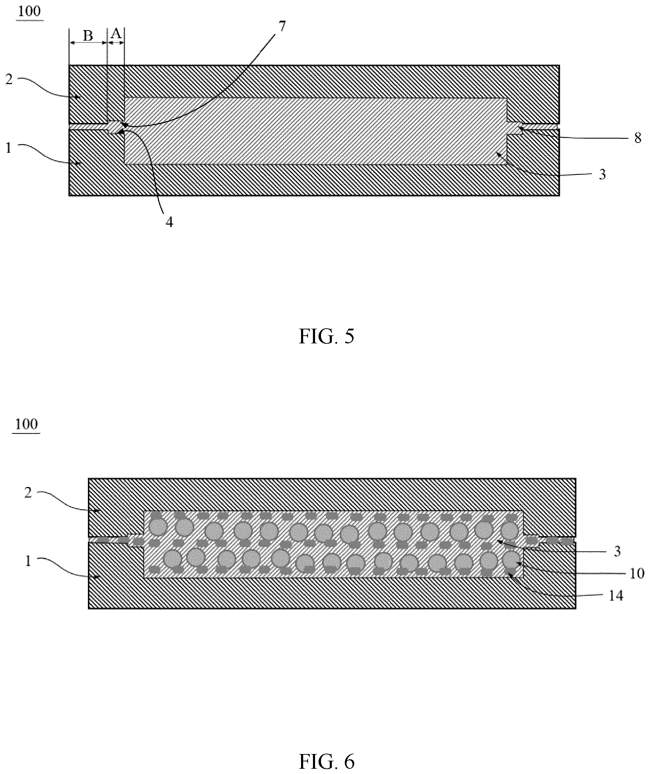

In some embodiments, a second binding layer 8 is provided between the first tab zone 12 and the second tab zone 22, the second binding layer 8 at least partially filling the gap between the first tab zone 12 and the second tab zone 22; and thickness of the second binding layer 8 at the first groove 4 and/or the second groove 7 (the region shown by A in FIG. 5) is greater than thickness of the second binding layer 8 at other parts (the region shown by B in FIG. 5). This can provide better support for the first tab zone 12 and the second tab zone 22.

In some embodiments, the second binding layer 8 has a thickness of 0.5 $\mu$m to 5 $\mu$m at the first groove 4 and/or the second groove 7; and optionally, the second binding layer 8 has a thickness of 0.5 $\mu$m to 3 $\mu$m at the first groove 4 and/or the second groove 7. As a result, the thickness is not excessively thick, which can enhance the effectiveness of direct welding of the tabs.

It should be understood that the thickness of the second binding layer 8 at the first groove 4 and/or the second groove 7 may be, but is not limited to, 0.5 $\mu$m, 1 $\mu$m, 1.5 $\mu$m, 2 $\mu$m, 2.5 $\mu$m, 3 $\mu$m, 3.5 $\mu$m, 4 $\mu$m, 4.5 $\mu$m, or 5 $\mu$m.

In some embodiments, the thickness of the second binding layer 8 at other parts is less than 0.5 $\mu$m. Through the controlling of thickness of the second binding layer 8 at parts other than the first groove 4 and the second groove 7 to be less than 0.5 $\mu$m, the second binding layer 8 in those parts can be directly penetrated during ultrasonic welding without affecting the welding effectiveness.

It should be understood that the thickness of the second binding layer 8 at other parts other than the first groove 4 and the second groove 7 may be, but is not limited to, 0.05 $\mu$m, 0.1 $\mu$m, 0.15 $\mu$m, 0.2 $\mu$m, 0.25 $\mu$m, 0.3 $\mu$m, 0.35 $\mu$m, 0.4 $\mu$m, or 0.45 $\mu$m.

In some embodiments, a ratio of total thickness of the first tab zone 12 and the second tab zone 22 to the thickness of the second binding layer 8 at the first groove 4 and/or the second groove 7 is greater than or equal to 2; and optionally, the ratio of the total thickness of the first tab zone 12 and the second tab zone 22 to the thickness of the second binding layer 8 at the first groove 4 and/or the second groove 7 is 2 to 20. This can likewise ensure the effectiveness of the ultrasonic welding, without causing a significant decrease in energy density.

It should be understood that the ratio of the total thickness of the first tab zone 12 and the second tab zone 22 to the thickness of the second binding layer 8 at the first groove 4 and/or the second groove 7 may be, but is not limited to, 2, 3, 4, 5, 6, 7, 8, 9, 10, 11, 12, 13, 14, 15, 16, 17, 18, 19, or 20.

In some embodiments, a ratio of width of the first groove 4 to width of the first tab zone 12 is 0.05 to 0.5; a ratio of width of the second binding layer at the first groove to width of the first tab zone is 0.05 to 0.5; a ratio of width of the second groove to width of the second tab zone is 0.05 to 0.5; or a ratio of width of the second binding layer at the second groove to width of the second tab zone is 0.05 to 0.5. In this way, a good support can be formed for the tab zones without affecting the effectiveness of direct welding.

It should be understood that the ratio of width of the first groove 4 to width of the first tab zone 12 may be, but is not limited to, 0.05, 0.1, 0.15, 0.2, 0.25, 0.3, 0.35, 0.4, 0.45, or 0.5. The ratio of width of the second groove 7 to width of the second tab zone 22 may be, but is not limited to, 0.05, 0.1, 0.15, 0.2, 0.25, 0.3, 0.35, 0.4, 0.45, or 0.5.

In some embodiments, a surface of the first body zone 11 facing away from the second body zone 21 remains flush with a surface of the first tab zone 12 facing away from the second tab zone 22; and a surface of the second body zone 21 facing away from the first body zone 11 remains flush with a surface of the second tab zone 22 facing away from the first tab zone 12.

In some embodiment, the side of the second tab zone 22 close to the second body zone 21 is connected to the first binding layer 3. In this way, the side wall of the second tab zone 22 is also supported by the first binding layer 3, and in particular, the root position of the second tab zone 22 is supported by the first binding layer 3. This prevents damage to the root during subsequent processes such as cold pressing, ensuring that the conductivity of the tabs of the battery is not compromised and avoiding deterioration of battery performance.

In some embodiments, the first tab zone 12 is connected to the second tab zone 22. As a result, direct connection between the first tab zone 12 and the second tab zone 22 can be achieved, creating an electrically conductive state. This makes the first tab zone 12 and the second tab zone 22 exhibit the same characteristics as the tab of a normal metal foil. This can better improve the performance, the current flow capacity of the tabs, and the fast charging capability of the battery. Additionally, this allows for direct ultrasonic welding, eliminating the need for an indirect welding process.

In some embodiments, the second binding layer 8 is connected to the first binding layer 3. This can further improve the stability at the junction and the resistance to cracking at the root of the first tab zone 12 and the second tab zone 22 during the cold pressing process, thereby improving the battery performance.

It should be understood that the second binding layer 8 and the first binding layer 3 may be made of the same material or different materials; and the second binding layer 8 and the first binding layer 3 may be separately prepared and connected to each other, or they may be integrally formed as a whole. Optionally, the second binding layer 8 and the first binding layer 3 are prepared using the same material and integrally formed.

In some embodiment, the side of the first tab zone 12 close to the first body zone 11 is connected to the first binding layer 3. In this way, the side wall of the first tab zone 12 is also supported by the first binding layer 3, and in particular, the root position of the first tab zone 12 is supported by the first binding layer 3. This prevents damage to the root during subsequent processes such as cold pressing, ensuring that the conductivity of the tabs of the battery is not compromised and avoiding deterioration of battery performance.

In some embodiments, the first metal layer 1 includes a plurality of first body zones 11, the plurality of first body zones 11 being spaced apart by third tab zones 13; the second metal layer 2 includes a plurality of second body zones 21, the plurality of second body zones 21 being spaced apart by fourth tab zones 23; and the third tab zone 13 has a thickness greater than the thickness of the first body zone 11, and the third tab zone 13 extends toward the fourth tab zone 23. As a result, more than three tab welding regions can be formed on one first metal layer 1 and second metal layer 2, creating a battery structure with more tabs.

It should be understood that the number of first body zones 11 in the first metal layer 1 may be two or three or more, and accordingly one or two or more third tab zones 13 are formed. Similarly, the number of second body zones 21 in the second metal layer 2 may be two or three or more, and accordingly one or two or more fourth tab zones 23 are formed. It should be understood that the number of the third tab zones 13 and the number of the fourth tab zones 23 should remain consistent, and the locations of the third tab zones 13 and the fourth tab zones 23 should correspond to each other.

In some embodiments, the fourth tab zone 23 has a thickness greater than the thickness of the second body zone 21 and the fourth tab zone 23 extends toward the third tab zone 13. As a result, the third tab zone 13 and the fourth tab zone 23 are provided extending toward each other, which can significantly increase the current flow capacity of the tabs.

In some embodiments, a side wall of the fourth tab zone 23 is connected to the first binding layer 3. In this way, the side wall of the fourth tab zone 23 is also supported by the first binding layer 3, and in particular, the root position of the fourth tab zone 23 is supported by the first binding layer 3. This prevents damage to the root during subsequent processes such as cold pressing, ensuring that the conductivity of the tabs of the battery is not compromised and avoiding deterioration of battery performance.

In some embodiments, the third tab zone 13 is connected to the fourth tab zone 23. As a result, direct connection and conductivity between the third tab zone 13 and the fourth tab zone 23 can be achieved, creating an electrically conductive state. This makes the third tab zone 13 and the fourth tab zone 23 exhibit the same characteristics as the tab of a normal metal foil. This can better improve the performance, the current flow capacity of the tabs, and the fast charging capability of the battery. Additionally, this allows for direct ultrasonic welding, eliminating the need for an indirect welding process.

In some embodiments, a third binding layer 9 is provided between the third tab zone 13 and the fourth tab zone 23, the third binding layer 9 at least partially filling a gap between the third tab zone 13 and the fourth tab zone 23. This can improve the stability of the third tab zone 13 and the fourth tab zone 23, preventing the occurrence of cracks and breaks in the third tab zone 13 and the fourth tab zone 23 during subsequent cold pressing processes. On one hand, the third binding layer 9 provides support to the third tab zone 13 and the fourth tab zone 23, and on the other hand, it does not affect the effectiveness of direct welding. During direct welding, the portions of the tab zones without the third binding layer 9 can be directly welded, while at the locations with the third binding layer 9, the third binding layer 9 can diffuse toward the vacant space, enabling electrical conductivity between the third tab zone 13 and the fourth tab zone 23 through welding.

It should be understood that the third binding layer 9 may entirely fill the gap between the third tab zone 13 and the fourth tab zone 23; or it may only partially fill the gap between the third tab zone 13 and the fourth tab zone 23.

In some embodiments, the third binding layer 9 partially fills the gap between the third tab zone 13 and the fourth tab zone 23. This facilitates processing of the third tab zone 13 and the fourth tab zone 23 as tabs through direct welding.

In some embodiments, the third binding layer 9 is connected to the first binding layer 3. This can further improve the stability at the junction and the resistance to cracking at the root of the third tab zone 13 and the fourth tab zone 23 during the cold pressing process, thereby improving the battery performance.

It should be understood that the third binding layer 9 and the first binding layer 3 may be made of the same material or different materials; and the third binding layer 9 and the first binding layer 3 may be separately prepared and connected to each other, or they may be integrally formed as a whole. Optionally, the third binding layer 9 and the first binding layer 3 are formed using the same material and are integrally formed.

In some embodiments, a side wall of the third tab zone 13 is connected to the first binding layer 3. In this way, the side wall of the third tab zone 13 is also supported by the first binding layer 3, and in particular, the root position of the third tab zone 13 is supported by the first binding layer 3. This prevents damage to the root during subsequent processes such as cold pressing, ensuring that the conductivity of the tabs of the battery is not compromised and avoiding deterioration of battery performance.

In some embodiments, thickness of the third binding layer 9 is 0.5 $\mu$m to 5 $\mu$m; and optionally, thickness of the third binding layer 9 is 0.5 $\mu$m to 3 $\mu$m. It should be understood that thickness of the third binding layer 9 may be, but is not limited to, 0.5 $\mu$m, 1 $\mu$m, 1.5 $\mu$m, 2 $\mu$m, 2.5 $\mu$m, 3 $\mu$m, 3.5 $\mu$m, 4 $\mu$m, 4.5 $\mu$m, or 5 $\mu$m.

In some embodiments, the sum of thicknesses of the first tab zone 12 and the second tab zone 22 is greater than or equal to 7 $\mu$m. The sum of thicknesses of the first tab zone 12 and the second tab zone 22 being greater than or equal to 7 $\mu$m can facilitate direct ultrasonic welding, better ensuring the conductivity performance of the tab zone.

In some embodiments, the sum of thicknesses of the first tab zone 12 and the second tab zone 22 is 7 $\mu$m to 15 $\mu$m. The sum of thicknesses of the first tab zone 12 and the second tab zone 22 being within the foregoing range can facilitate ultrasonic welding and improve the conductivity performance without reducing the energy density. If the sum of thicknesses of the first tab zone 12 and the second tab zone 22 is too large, this cannot significantly improve the conductivity performance, but may reduce the energy density.

In some embodiments, a sum of thicknesses of the third tab zone 13 and the fourth tab zone 23 is greater than or equal to 7 μm. The sum of thicknesses of the third tab zone 13 and the fourth tab zone 23 being greater than or equal to 7 μm can likewise facilitate direct ultrasonic welding, better ensuring the conductivity performance of the tab zone.

In some embodiments, the sum of thicknesses of the third tab zone 13 and the fourth tab zone 23 is 7 μm to 15 μm. The sum of thicknesses of the third tab zone 13 and the fourth tab zone 23 being within the foregoing range can facilitate ultrasonic welding and improve the conductivity performance without reducing the energy density. If the sum of thicknesses of the third tab zone 13 and the fourth tab zone 23 is too large, this cannot significantly improve the conductivity performance, but may reduce the energy density.

It should be understood that the sum of thicknesses of the first tab zone 12 and the second tab zone 22 may be, but is not limited to, 7 μm, 8 μm, 9 μm, 10 μm, 11 μm, 12 μm, 13 μm, 14 μm, or 15 μm; and the sum of thicknesses of the third tab zone 13 and the fourth tab zone 23 may be, but is not limited to, 7 μm, 8 μm, 9 μm, 10 μm, 11 μm, 12 μm, 13 μm, 14 μm, or 15 μm.

In some embodiments, the sum of thicknesses of the first tab zone 12 and the second tab zone 22 is 5 μm to 13 μm greater than the sum of thicknesses of the first body zone 11 and the second body zone 21. In this way, the thickening of the first tab zone 12 and the second tab zone 22 can enhance the current flow capacity of the composite current collector and improve the fast charging performance. At the same time, the first body zone 11 and the second body zone 21 are relatively thinner, which enables the battery to pass the needle penetration test, and improves the safety performance of the battery. Furthermore, reducing the total thickness of the first body zone 11 and the second body zone 21 can also improve the energy density of the battery. The thicknesses of the first tab zone 12 and the second tab zone 22 should not be excessively thick. Excessive thickness does not significantly improve the fast charging performance and may reduce the energy density.

It should be understood that the difference between the sum of thicknesses of the first tab zone 12 and the second tab zone 22 and the sum of thicknesses of the first body zone 11 and the second body zone 21 may be, but is not limited to, 5 μm, 6 μm, 7 μm, 8 μm, 9 μm, 10 μm, 11 μm, 12 μm, or 13 μm.

In some embodiments, the sum of thicknesses of the third tab zone 13 and the fourth tab zone 23 is 5 μm to 13 μm greater than the sum of thicknesses of the first body zone 11 and the second body zone 21. Similarly, the thickening of the third tab zone 13 and the fourth tab zone 23 can enhance the current flow capacity of the composite current collector 100 and improve the fast charging performance. The first body zone 11 and the second body zone 21 are relatively thinner, which enables the battery to pass the needle penetration test, and improve the safety performance of the battery. Furthermore, reducing the thickness of the first body zone 11 and the second body zone 21 can also improve the energy density of the battery.

It should be understood that the difference between the sum of thicknesses of the third tab zone 13 and the fourth tab zone 23 and the sum of thicknesses of the first body zone 11 and the second body zone 21 may be, but is not limited to, 5 μm, 6 μm, 7 μm, 8 μm, 9 μm, 10 μm, 11 μm, 12 μm, or 13 μm.

It should be understood that the foregoing first tab zone 12, second tab zone 22, third tab zone 13, and fourth tab zone 23 may have the same or different thicknesses; and the foregoing first body zone 11 and second body zone 21 may have the same or different thicknesses.

In some embodiments, the first binding layer 3 contains one or more of a particulate material 10 and a conductive agent 14. In this way, the particulate material 10 contained in the first binding layer 3 can effectively improve the support function of the first binding layer 3; and the conductive agent 14 contained in the first binding layer 3 can effectively improve the conductivity performance of the first binding layer 3.

It should be understood that the first binding layer 3 may contain any one of the particulate material 10 and the conductive agent 14, or both the particulate material 10 and the conductive agent 14. Moreover, the second binding layer 8 and/or the third binding layer 9 may also contain one or more of the foregoing particulate material 10 and conductive agent 14. Similarly, they can improve the support function and conductivity performance of the second binding layer 8 and the third binding layer 9, respectively.

In some embodiments, the particulate material 10 includes one or more of inorganic compound particles and metal particles. That is, the particulate material 10 may be inorganic compound particles or metal particles, or may be a mixture of inorganic compound particles and metal particles.

In some embodiments, the inorganic compound particles include one or more of alumina, silicon carbide, silicon nitride, silicon oxide, calcium oxide, boehmite, titanium dioxide, zirconium dioxide, magnesium oxide, zinc oxide, barium sulfate, and boron carbide. In other words, the inorganic compound particles may be any of the foregoing particles, or may be a mixture of more than one of the foregoing particles.

In some embodiments, the metal particles include an alloy of at least one or more of Cu, Al, Ni, Ti, Pt, Fe, Au, Co, Cr, W, Mo, Mg, Pb, In, and Sn. That is, the metal particles may be any one of Cu, Al, Ni, Ti, Pt, Fe, Au, Co, Cr, W, Mo, Mg, Pb, In, or Sn particles; a mixture of metal particles of any two or more of Cu, Al, Ni, Ti, Pt, Fe, Au, Co, Cr, W, Mo, Mg, Pb, In, and Sn particles; or particles of an alloy of any two or more of Cu, Al, Ni, Ti, Pt, Fe, Au, Co, Cr, W, Mo, Mg, Pb, In, and Sn.

In some embodiments, the conductive agent 14 includes one or more of carbon nanotubes, conductive carbon, graphene, and conductive polymers. In other words, the conductive agent 14 may include any one of carbon nanotubes, conductive carbon, graphene, and conductive polymers; or may include two or more of carbon nanotubes, conductive carbon, graphene, and conductive polymers.

In some embodiments, a sum of the mass percentages of the particulate material 10 and the conductive agent 14 in the first binding layer 3 is 20% to 70%. It should be understood that the sum of the mass percentages of the particulate material 10 and conductive agent 14 in the first binding layer 3 may be, but is not limited to, 20%, 25%, 30%, 35%, 40%, 45%, 50%, 55%, 60%, 65%, and 70%. It should be understood that the sum of the mass percentages of the particulate material 10 and conductive agent 14 in the second binding layer 8 and the third binding layer 9 may also be 20% to 70%, respectively.

In some embodiments, the binder in the first binding layer 3 includes one or more of polyamide, polyimide, polyethylene terephthalate, polybutylene terephthalate, polyethylene naphthalate, polycarbonate, polyethylene, carboxylic acid and its derivative graft polyethylene, polypropylene, carboxylic acid and its derivative graft polypropylene, polypropylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polymethyl methacrylate, polyethylene glycol, polysulfide nitride, polyphenylene, polypyrrole, polyaniline, polythiophene, polypyridine, cellulose, starch, protein, epoxy resin, polypyrrole, polythiophene, polyaniline, and phenolic resin.

It should be understood that the binder in the first binding layer 8 may be any one of the binders enumerated above; or a mixture of two or more of the binders enumerated above. The binders in the second binding layer 8 and the third binding layer 9 may likewise be one or more of the binders enumerated above.

In some embodiments, the binder in the first binding layer 3, the second binding layer 8, and the third binding layer 9 may also be a derivative, crosslinked product, or copolymer of the foregoing enumerated kinds of binders.

In some embodiments, the first metal layer 1 and the second metal layer 2 each include at least one of or an alloy of Cu, Al, Ni, Ti, Pt, Fe, Au, Co, Cr, W, Mo, Mg, Pb, In, and Sn. That is, both the first metal layer 1 and the second metal layer 2 may use any one or two or more of Cu, Al, Ni, Ti, Pt, Fe, Au, Co, Cr, W, Mo, Mg, Pb, In, and Sn, or may be an alloy of any two or more of Cu, Al, Ni, Ti, Pt, Fe, Au, Co, Cr, W, Mo, Mg, Pb, In, and Sn.

It should be noted that the first metal layer 1 and the second metal layer 2 in the composite current collector 100 of this application may be finished metal layers; or one of the metal layers may be a finished metal layer, and the other metal layer may be prepared through processes such as vacuum vapor deposition (Vapor deposition), electroless plating (Electroless plating), and electroplating (Electroplating) in the process of preparing the composite current collector 100.

In some embodiments, the composite current collector 100 of this application is prepared through the following method:
applying adhesive to the first tab zone 12 of the first metal layer 1 for protection; chemically etching the first body zone 11 of the first metal layer 1; applying a binder on the first body zone 11 of the first metal layer 1, followed by drying, where thickness of the binding layer after drying is greater than the etching depth of the first body zone 11, and the binder is mixed with inorganic compound particles; hot pressing the second body zone 21 of the second metal layer 2 onto another side of the binder, with the hot pressing temperature exceeding the melting point of the binding layer by 5°C to 20°C; curing at 60°C to 80°C for 48 h to 72 h; and selectively thinning the first metal layer 1 and the second metal layer 2 through etching. The second binding layer 8 and the third binding layer 9 in the composite current collector 100 may be formed by the overflow of the binding layer during hot pressing.

In some embodiments, the composite current collector 100 of this application is prepared through the following method:
applying adhesive to the first tab zone 12 of the first metal layer 1 for protection; chemically etching the first body zone 11 of the first metal layer 1; applying a binder on the first body zone 11 of the first metal layer 1, followed by drying, where thickness of the binding layer after drying is greater than the etching depth of the first body zone 11, and the binder is mixed with particles of an inorganic compound; preparing the second metal layer 2 on another side of the binding layer through at least one method of vacuum vapor deposition, electroless plating, and electroplating, where the second tab zone 22 of the second metal layer 2 is directly connected and conductive with the first tab zone 12 of the first metal layer 1; performing hot pressing; and curing for 48 h to 72 h at 60°C to 80°C. The second binding layer 8 and the third binding layer 9 in the composite current collector 100 may be formed by the overflow of the binding layer during hot pressing.

In some embodiments, a second aspect of this application provides a secondary battery, where the secondary battery includes the composite current collector 100 according to the first aspect of this application. As a result, the secondary battery has a good current flow capacity, high energy density, and good safety performance.

In some embodiments, a second aspect of this application provides an electric apparatus, where the electric apparatus includes the secondary battery according to the second aspect of this application. Specifically, the secondary battery may serve as a power source for the electric apparatus to provide an operating voltage to the electric apparatus.

The following describes a secondary battery, and an electric apparatus in this application with appropriate reference to the accompanying drawings.

Unless otherwise indicated, the mentioned battery components and material types or contents apply to both lithium-ion secondary batteries and sodium-ion secondary batteries.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

[Positive electrode plate]

The positive electrode plate includes a positive electrode current collector and a positive electrode film layer provided on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

The positive electrode plate in this application may employ the composite current collector of the first aspect of this application.

In some embodiments, the positive electrode active material may include a well-known positive electrode active material used for batteries in the art.

For example, the positive electrode active material of a lithium-ion secondary battery may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In an example, the positive electrode active material of a sodium-ion secondary battery may include at least one of the following materials: sodium transition metal oxide, polyanionic compound, and Prussian blue compound. However, this application is not limited to these materials, and other conventional commonly known materials that can be used as the positive electrode active material for sodium-ion batteries may also be used.

In an optional technical solution for this application, in the sodium transition metal oxide, the transition metal may be at least one of Mn, Fe, Ni, Co, Cr, Cu, Ti, Zn, V, Zr, and Ce. The sodium transition metal oxide is, for example, $Na_xMO_2$, where M is one or more of Ti, V, Mn, Co, Ni, Fe, Cr and Cu, and $0 < x \le 1$.

In an optional technical solution for this application, the polyanionic compound may be a class of compounds having sodium ion, transition metal ion, and tetrahedral $(YO_4)^{n-}$ anionic unit. The transition metal may be at least one of Mn, Fe, Ni, Co, Cr, Cu, Ti, Zn, V, Zr, and Ce; Y may be at least one of P, S, and Si; and n represents the valence state of $(YO_4)^{n-}$.

The polyanionic compound may also be a class of compounds having sodium ion, transition metal ion, tetrahedral $(YO_4)^{n-}$ anionic unit, and halogen anion. The transition metal may be at least one of Mn, Fe, Ni, Co, Cr, Cu, Ti, Zn, V, Zr, and Ce; Y may be at least one of P, S, and Si; n represents the valence state of $(YO_4)^{n-}$; and the halogen can be at least one of F, Cl, and Br.

The polyanionic compound may also be a class of compounds having sodium ion, tetrahedral $(YO_4)^{n-}$ anionic unit, polyhedral unit $(ZO_y)^{m+}$, and optional halogen anion. Y may be at least one of P, S, and Si, and n represents the

valence state of $(YO_4)^{n-}$; Z represents a transition metal and may be at least one of Mn, Fe, Ni, Co, Cr, Cu, Ti, Zn, V, Zr, and Ce, and m represents the valence state of $(ZO_y)^{m+}$; and the halogen may be at least one of F, Cl and Br.

The polyanionic compound is, for example, at least one of $NaFePO_4$, $Na_3V_2(PO_4)_3$ (sodium vanadium phosphate, abbreviated as NVP), $Na_4Fe_3(PO_4)_2(P_2O_7)$, $NaM'PO_4F$ (M' is one or more of V, Fe, Mn and Ni), and $Na_3(VO_y)_2(PO_4)_2F_{3-2y}$ ($0 \leq y \leq 1$).

The Prussian blue compound may be a class of compounds having sodium ion, transition metal ion, and cyanide ion ($CN^-$). The transition metal may be at least one of Mn, Fe, Ni, Co, Cr, Cu, Ti, Zn, V, Zr, and Ce. The Prussian blue compound is, for example, $Na_aMe_bMe'_c(CN)_6$, where Me and Me' are each independently at least one of Ni, Cu, Fe, Mn, Co, and Zn, $0 < a \leq 2$, $0 < b < 1$, and $0 < c < 1$.

The weight percentage of the positive electrode active material in the positive electrode film layer is 80wt% to 100wt%, based on the total weight of the positive electrode film layer.

In some embodiments, the positive electrode film layer optionally further includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. The weight percentage of the binder in the positive electrode film layer is 0wt% to 20wt%, based on the total weight of the positive electrode film layer.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber. The weight percentage of the conductive agent in the positive electrode film layer is 0wt% to 20wt%, based on the total weight of the positive electrode film layer.

In some embodiments, the positive electrode plate may be prepared in the following manner: the compositions used for preparing the positive electrode plate, for example, the positive electrode active material, the conductive agent, the binder, and any other compositions, are dispersed in a solvent (for example, N-methylpyrrolidone) to form a positive electrode slurry, where the positive electrode slurry has a solid content of 40wt% to 80wt% and the viscosity at room temperature is adjusted to 5000 mPa s to 25000 mPa s; and the positive electrode slurry is applied on the surface of the positive electrode current collector, followed by drying and cold pressing by a cold rolling machine, to form the positive electrode plate, where the surface density of the positive electrode powder coating is 150 $mg/m^2$ to 350 $mg/m^2$, and the compacted density of the positive electrode plate is 3.0 $g/cm^3$ to 3.6 g /$cm^3$, optionally 3.3 $g/cm^3$ to 3.5 $g/cm^3$.

The formula for calculating the compacted density is:

Compacted density = Coating surface density/(Electrode plate thickness after pressing - Current collector thickness).

The mass M of the positive electrode active substance per unit area of the positive electrode film can be obtained using a standard balance.

The thickness T of the positive electrode film may be measured using a ten-thousandths micrometer. For example, a ten-thousandths micrometer of model Mitutoyo293-100 with 0.1 $\mu$m resolution may be used. It should be noted that the thickness of the positive electrode film described in this application refers to the thickness of the positive electrode film in the positive electrode plate that has been compacted by cold pressing and used for battery assembly.

[Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

The negative electrode plate in this application may employ the composite current collector of the first aspect of this application.

In some embodiments, the negative electrode active material may be a well-known negative electrode active material used for a battery in the art.

For example, the negative electrode active material of a lithium-ion secondary battery may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In an example, the negative electrode active material of the sodium-ion secondary battery is typically a hard carbon material, a two-dimensional metal carbide, or a nitride. Preferably, the negative electrode active material of the sodium-ion secondary battery is typically a hard carbon material.

The weight percentage of the negative electrode active material in the negative electrode film layer is 70wt% to 100wt%, based on the total weight of the negative electrode film layer.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS). The weight percentage of the binder in the negative electrode film layer is 0wt% to 30wt%, based on the total weight of the negative electrode film layer.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber. The weight percentage of the conductive agent in the negative electrode film layer is 0wt% to 20wt%, based on the total weight of the negative electrode film layer.

In some embodiments, the negative electrode film layer further optionally includes other promoters such as a thickener (for example, sodium carboxymethyl cellulose (CMC-Na)). The weight percentage of the other promoters in the negative electrode film layer is 0wt% to 15wt%, based on the total weight of the negative electrode film layer.

In some embodiments, the negative electrode plate may be prepared in the following manner: the compositions used for preparing the negative electrode plate, for example, the negative electrode active material, the conductive agent, the binder, and any other compositions, are dispersed in a solvent (for example, deionized water) to form a negative electrode slurry, where the negative electrode slurry has a solid content of 30wt% to 70wt%, and the viscosity at room temperature is adjusted to 2000 mPa s to 10000 mPa s; and the obtained negative electrode slurry is applied on the negative electrode current collector, followed by drying, and cold pressing, for example, calendering, to obtain the negative electrode plate. The surface density of the negative electrode powder coating is 75 mg/m$^2$ to 220 mg/m$^2$, and the compacted density of the negative electrode plate is 1.2 g/m$^3$ to 2.0 g/m$^3$.

The mass M of the negative electrode active substance per unit area of the negative electrode film can be obtained using a standard balance.

The thickness T of the negative electrode film may be measured using a ten-thousandths micrometer. For example, a ten-thousandths micrometer of model Mitutoyo293-100 with 0.1 $\mu$m resolution may be used. It should be noted that the thickness of the negative electrode film described in this application refers to the thickness of the negative electrode film in the negative electrode plate that has been compacted by cold pressing and used for battery assembly.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolyte salt and a solvent.

In some embodiments, the electrolyte salt of a lithium-ion secondary battery may be one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO$_2$F$_2$), lithium difluoro(dioxalato)phosphate (LiDFOP), and lithium tetrafluoro oxalato phosphate (LiTFOP).

The electrolyte salt of a sodium-ion secondary battery may be selected from one or more of sodium hexafluorophosphate, sodium bisfluoromethanesulfonimide, sodium trifluoromethanesulfonate, sodium tetrafluoroborate, sodium difluorophosphate, sodium perchlorate, and sodium chloride.

The concentration of the electrolyte salt is typically 0.5mol/L to 5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methylpropyl carbonate (MPC), ethylpropyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the liquid electrolyte further optionally includes an additive. For example, the additive may include a negative electrode film-forming additive, a positive electrode film-forming additive, or may include an additive that can improve some performance of batteries, for example, an additive for improving over-charge performance of batteries, an additive for improving high-temperature performance or low-temperature performance of batteries, and the like.

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the separator has a thickness of 6 $\mu$m to 40 $\mu$m, optionally 12 $\mu$m to 20 $\mu$m.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, or polybutylene succinate.

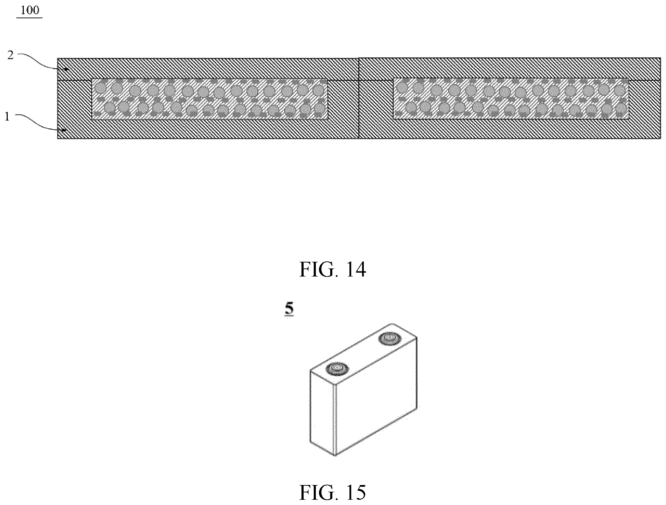

This application does not impose any special limitations on a shape of the secondary battery, and the secondary battery may be cylindrical, rectangular, or of any other shapes. For example, FIG. 15 shows a secondary battery 5 of a rectangular structure as an example.

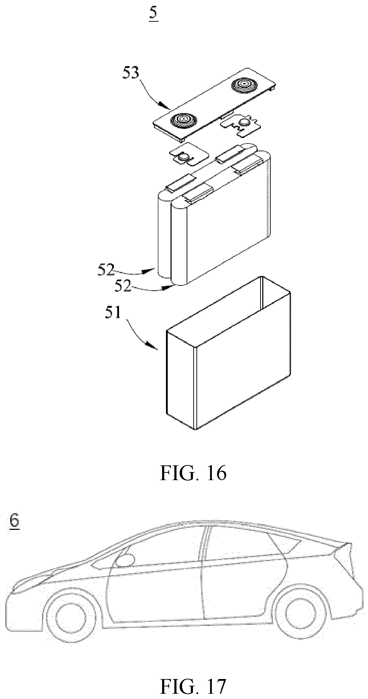

In some embodiments, referring to FIG. 16, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery 5 may be assembled into a battery module, and the battery module may include one or more secondary batteries 5. The specific quantity may be chosen by persons skilled in the art according to use and capacity of the battery module.

In the battery module, a plurality of secondary batteries 5 may be sequentially arranged in a length direction of the battery module. Certainly, the batteries may alternatively be arranged in any other manners. Further, the plurality of secondary batteries 5 may be fastened through fasteners.

Optionally, the battery module may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

The battery pack may include a battery box and a plurality of battery modules arranged in the battery box. The battery box includes an upper box body and a lower box body. The upper box body can cover the lower box body to form an enclosed space for accommodating the battery modules. The plurality of battery modules may be arranged in the battery box in any manner.

In addition, this application further provides an electric apparatus. The electric apparatus includes the secondary battery provided in this application. The secondary battery may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 17 shows an electric apparatus 6 as an example. This electric apparatus 6 is a battery electric vehicle, a hybrid electric vehicle, a plug-in hybrid electric vehicle, or the like. To satisfy a requirement of the electric apparatus 6 for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

Examples

To describe the technical problems solved by this application, technical solutions, and beneficial effects of this application more clearly, the following further describes this application in detail with reference to the embodiments and accompanying drawings. Apparently, the described embodiments are merely some rather than all of the embodiments of this application. The following description of at least one example embodiment is merely illustrative and definitely is not construed as any limitation on this application or on use of this application. All other embodiments obtained by persons of ordinary skill in the art based on the embodiments of this application without creative efforts shall fall within the protection scope of this application.

Examples whose technical solutions or conditions are not specified are made in accordance with technical solutions or conditions described in literature in the field or made in accordance with product instructions. The reagents or instruments used are all conventional products that are commercially available if no manufacturer is indicated.

I. Examples of current collector preparation

**Example 1 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S3. The foregoing binding layer slurry was applied onto the first body zone of the first aluminum foil, followed by drying at 80°C to 100°C; the second aluminum foil was hot pressed onto the surface of the binder facing away from the first aluminum foil, with the first tab zone of the first aluminum foil extending toward the second tab zone of the second aluminum foil, where the temperature of the hot pressing was about 180°C (the melting point of the binder was about 163°C) and the pressure was controlled so that the binding layer diffused from the first body zone to the first tab zone; and the curing process was conducted at 70°C for 72 h;

S4. Optionally, non-thinning regions, that is, regions of the first aluminum foil and the second aluminum foil that do not need to be thinned, were coated with a protective adhesive layer (PMMA) according to the thickness requirements, and the surface of the second aluminum foil facing away from the binding layer was chemically thinned; and then the protective adhesive was removed using acetone; and

S5. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 2 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. The non-groove zone of the first tab was coated with an adhesive (PMMA) for protection; the first body zone of the first aluminum foil and the groove zone of the first tab were etched using a NaOH solution; and then the protective adhesive was removed using acetone;

S3. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S4. The foregoing binding layer slurry was applied onto the first body zone of the first aluminum foil, followed by drying at 80°C to 100°C; the second aluminum foil was hot pressed onto the surface of the binder facing away from the first aluminum foil, with the first tab zone of the first aluminum foil extending toward the second tab zone of the second aluminum foil, where the temperature of the hot pressing was about 180°C (the melting point of the binder was about 163°C) and the pressure was controlled so that the binding layer diffused from the first body zone to the groove zone of the first tab zone; and the curing process was conducted at 70°C for 72 h;

S5. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S6. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 3 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. A second aluminum foil was taken, and the second tab zone of the second aluminum foil was coated with an adhesive (PMMA) for protection; the second body zone of the second aluminum foil was etched using a NaOH solution; and then the protective adhesive was removed using acetone;

S3. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S4. The foregoing binding layer slurry was applied onto the first body zone of the first aluminum foil, followed by drying at 80°C to 100°C; the second aluminum foil was hot pressed onto the surface of the binder facing away from the first aluminum foil, with the first tab zone of the first aluminum foil and the second tab zone of the second aluminum foil extending toward each other, where the temperature of the hot pressing was about 180°C (the melting point of the binder was about 163°C) and the pressure was controlled so that the binding layer diffused from the first body zone to the first tab zone and the second tab zone; and the curing process was conducted at 70°C for 72 h;

S5. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S6. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 4 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. The non-groove zone of the first tab was coated with an adhesive (PMMA) for protection; the first body zone of the first aluminum foil and the groove zone of the first tab were etched using a NaOH solution; and then the protective adhesive was removed using acetone;

S3. A second aluminum foil was taken, and the second tab zone of the second aluminum foil was coated with an adhesive (PMMA) for protection; the second body zone of the second aluminum foil was etched using a NaOH solution; and then the protective adhesive was removed using acetone;

S4. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S5. The foregoing binding layer slurry was applied onto the first body zone of the first aluminum foil, followed by drying at 80°C to 100°C; the second aluminum foil was hot pressed onto the surface of the binder facing away from the first aluminum foil, with the first tab zone of the first aluminum foil and the second tab zone of the second aluminum foil extending toward each other, where the temperature of the hot pressing was about 180°C (the melting point of the binder was about 163°C) and the pressure was controlled so that the binding layer diffused from the first body zone to the first tab zone and the second tab zone; and the curing process was conducted at 70°C for 72 h;

S6. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S7. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 5 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. The non-groove zone of the first tab was coated with an adhesive (PMMA) for protection; the first body zone of the first aluminum foil and the groove zone of the first tab were etched using a NaOH solution; and then the protective adhesive was removed using acetone;

S3. A second aluminum foil was taken, and the second tab zone of the second aluminum foil was coated with an adhesive (PMMA) for protection; the second body zone of the second aluminum foil was etched using a NaOH solution; and then the protective adhesive was removed using acetone;

S4. The non-groove zone of the second tab was coated with an adhesive (PMMA) for protection; the second body zone of the second aluminum foil and the groove zone of the second tab were etched using a NaOH solution; and then the protective adhesive was removed using acetone;

S5. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S6. The foregoing binding layer slurry was applied onto the first body zone of the first aluminum foil, followed by drying at 80°C to 100°C; the second aluminum foil was hot pressed onto the surface of the binder facing away from the first aluminum foil, with the first tab zone of the first aluminum foil and the second tab zone of the second aluminum foil extending toward each other, where the temperature of the hot pressing was about 180°C (the melting point of the binder was about 163°C) and the pressure was controlled so that the binding layer diffused from the first body zone to the first tab zone and the second tab zone; and the curing process was conducted at 70°C for 72 h;

S7. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S8. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 6 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. The non-groove zone of the first tab was coated with an adhesive (PMMA) for protection; the first body zone of the first aluminum foil and the groove zone of the first tab were etched using a NaOH solution; and then the protective adhesive was removed using acetone;

S3. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S4. The foregoing binding layer slurry was applied onto the first body zone of the first aluminum foil, followed by drying at 80°C to 100°C; and the second aluminum foil was hot pressed onto the surface of the binder facing away from the first aluminum foil, with the first tab zone of the first aluminum foil extending toward the second tab zone of the second aluminum foil, where the temperature of the hot pressing was about 180°C (the melting point of the binder was about 163°C) and the pressure was controlled so that the binding layer diffused from the first body zone to the first tab zone;

S5. Another hot pressing was performed on the first tab zone of the first aluminum foil and the second tab zone of the second aluminum foil, causing the second binding layer to melt and diffuse again and form a thin binding layer in the non-groove zone between the first tab zone and the second tab zone; and the curing process was conducted at 70°C for 72 h;

S6. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S7. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 7 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. The non-groove zone of the first tab was coated with an adhesive (PMMA) for protection; the first body zone of the first aluminum foil and the groove zone of the first tab were etched using a NaOH solution; and then the protective adhesive was removed using acetone;

S3. A second aluminum foil was taken, and the second tab zone of the second aluminum foil was coated with an adhesive (PMMA) for protection; the second body zone of the second aluminum foil was etched using a NaOH solution; and then the protective adhesive was removed using acetone;

S4. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S5. The foregoing binding layer slurry was applied onto the first body zone of the first aluminum foil, followed by drying at 80°C to 100°C; and the second aluminum foil was hot pressed onto the surface of the binder facing away from the first aluminum foil, with the first tab zone of the first aluminum foil and the second tab zone of the second aluminum foil extending toward each other, where the temperature of the hot pressing was about 180°C (the melting point of the binder was about 163°C) and the pressure was controlled so that the binding layer diffused from the first body zone to the first tab zone and the second tab zone;

S6. Another hot pressing was performed on the first tab zone of the first aluminum foil and the second tab zone of the second aluminum foil, causing the second binding layer to melt and diffuse again and form a thin binding layer in the non-groove zone between the first tab zone and the second tab zone; and the curing process was conducted at 70°C for 72 h;

S7. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S8. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 8 of current collector preparation:**

S 1. A first aluminum foil was taken, and the first tab zone of the first aluminum foil was coated with an adhesive (PMMA) for protection; the first body zone of the first aluminum foil was etched using a NaOH solution; and then the protective adhesive was removed using acetone;

S2. The non-groove zone of the first tab was coated with an adhesive (PMMA) for protection; the first body zone of the first aluminum foil and the groove zone of the first tab were etched using a NaOH solution; and then the protective adhesive was removed using acetone;

S3. A second aluminum foil was taken, and the second tab zone of the second aluminum foil was coated with an adhesive (PMMA) for protection; the second body zone of the second aluminum foil was etched using a NaOH solution; and then the protective adhesive was removed using acetone;

S4. The non-groove zone of the second tab was coated with an adhesive (PMMA) for protection; the second body zone of the second aluminum foil and the groove zone of the second tab were etched using a NaOH solution; and then the protective adhesive was removed using acetone;

S5. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S6. The foregoing binding layer slurry was applied onto the first body zone of the first aluminum foil, followed by drying at 80°C to 100°C; and the second aluminum foil was hot pressed onto the surface of the binder facing away from the first aluminum foil, with the first tab zone of the first aluminum foil and the second tab zone of the second aluminum foil extending toward each other, where the temperature of the hot pressing was about 180°C (the melting point of the binder was about 163°C) and the pressure was controlled so that the binding layer diffused from the first body zone to the first tab zone and the second tab zone;

S7. Another hot pressing was performed on the first tab zone of the first aluminum foil and the second tab zone of the second aluminum foil, causing the second binding layer to melt and diffuse again and form a thin binding layer in the non-groove zone between the first tab zone and the second tab zone; and the curing process was conducted at 70°C for 72 h;

S8. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S9. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

**Example 9 of current collector preparation:**

S1. The first aluminum foil was taken, and the first tab zone of one surface and all of another surface of the first aluminum foil were applied with an adhesive (PMMA) for protection; and the first body zone of the unprotected surface of the aluminum foil was etched using a NaOH solution;

S2. Preparing the binding layer slurry: the binder used was maleic anhydride modified polypropylene, the particulate material used was metal copper particles, and the conductive agent used was carbon nanotubes. They were selected and mixed in a weight ratio of 40% binder + 40% metal particles + 20% carbon nanotubes and were dissolved in an organic solvent to obtain a binder slurry with a solid content of 50%;

S3. The foregoing binder slurry was applied onto the etched region of the first aluminum foil, followed by drying at 80°C to 100°C;

S4: An aluminum layer was vapor-deposited on the surface of the binding layer and the first tab zone of the first aluminum foil, where the first tab zone extends toward the second tab zone vapor-deposited with the aluminum layer, and the second tab zone is connected to the first tab zone.

S5. The curing process was conducted at 70°C for 72 h to obtain a composite current collector.

**Example 10 of current collector preparation:**

S1. A first aluminum foil was taken, and the first tab zone and the third tab zone of the first aluminum foil was coated with an adhesive (PMMA) for protection; the first body zone of the first aluminum foil was etched using a NaOH solution; and then the protective adhesive was removed using acetone;

S2. Preparing the binding layer slurry: the binder used was maleic anhydride modified polypropylene, the particulate material used was metal copper particles, and the conductive agent used was carbon nanotubes. Based on mass percentage, 40% binder + 40% metal copper particles + 20% carbon nanotubes were dissolved in an organic solvent to obtain a binding layer slurry with a solid content of 50%;

S3. The foregoing binding layer slurry was applied onto the first body zone of the first aluminum foil, followed by drying at 80°C to 100°C; the second aluminum foil was hot pressed onto the surface of the binder facing away from the first aluminum foil, with the first tab zone and the third tab zone of the first aluminum foil extending toward the second tab zone and the fourth tab zone of the second aluminum foil, where the temperature of the hot pressing was about 180°C (the melting point of the binder was about 163°C) and the pressure was controlled so that the binding layer diffused from the first body zone to the first tab zone and the third tab zone; and the curing process was conducted at 70°C for 72 h;

S4. Optionally, regions of the first aluminum foil and the second aluminum foil that do not need to be thinned were coated with a protective adhesive layer (PMMA) according to the thickness requirements, and the surface of the second aluminum foil facing away from the binding layer was chemically thinned; and then the protective adhesive was removed using acetone; and

S5. Optionally, the regions of the first aluminum foil and the second aluminum foil that do not need to be thinned were coated with a protective adhesive layer (PMMA) according to the thickness requirements, and the surface of the first aluminum foil facing away from the binding layer was etched; and then the protective adhesive was removed using acetone to obtain the composite current collector.

II. Application examples

**Application examples 1 to 3 and 5:**

A composite current collector was prepared using the method in Example 5 of current collector preparation. The above composite current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested.

For the DCR performance test, the battery was adjusted to 50% SOC, discharged at a rate of 4C (corresponding to discharge current I) for 30 seconds, and the voltage difference $\Delta V$ before and after the 30-second discharge was recorded. The DCR corresponding to 50% SOC was calculated using the following formula: DCR = $\Delta V/I$.

The tab temperature during charging at 2C was tested by placing a temperature sensing wire at the root of the tab and reading the maximum temperature during the 2C high-rate charging process.

The needle penetration performance was tested by fixing a fully charged cell on a fixture, connecting voltage sensing wires to the positive and negative electrodes of the cell, placing temperature sensing wires at multiple positions on the cell, and penetrating the cell with a 3 mm diameter high-temperature resistant steel needle at a speed of 80 mm/s. The cell was left to stand for 1 hour and the voltage change over time was recorded. In this study, if after the needle penetration, smoke or fire occurred or a voltage drop was greater than 0.5 V after left standing for 1 hour, the cell was considered as having not passed the needle penetration test; if after the needle penetration, there was no smoke or fire, and the voltage drop was less than or equal to 0.5 V after left standing for 1 hour, the cell was considered as having passed the needle penetration test.

The energy density test was conducted at room temperature. The prepared secondary battery was constant-voltage and constant-current charged for the first time at a rate of 1C. The end voltage was 4.2 V, and the cutoff current was 0.05C. The battery was then discharged at a current of 1C rate, and the end-of-discharge voltage was 2.8 V. The discharging capacity Cb and discharge plateau voltage U during the first cycle of the secondary battery were recorded.

The length (L), width (W), and height (H) of the battery were measured using a soft ruler or steel ruler with a minimum graduation value of 1 mm. The volumetric energy density of the secondary battery was calculated using the following formula:

$$\text{Volumetric energy density} = Cb * U/(L * W * H).$$

The structural parameters of the composite current collector and the performance test results of the secondary battery are shown in Table 1.

**Application example 4:**

A composite current collector was prepared using the method in Example 3 of current collector preparation. The above composite current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested. The test method was the same as that of Application example 1.

The structural parameters of the composite current collector and the performance test results of the secondary battery are shown in Table 1.

**Application examples 6 to 8, and 10 to 16:**

A composite current collector was prepared using the method in Example 8 of current collector preparation. The above composite current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested. The test method was the same as that of Application example 1.

The structural parameters of the composite current collector and the performance test results of the secondary battery are shown in Table 1.

**Application example 9:**

A composite current collector was prepared using the method in Example 6 of current collector preparation. The above composite current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested. The test method was the same as that of Application example 1.

The structural parameters of the composite current collector and the performance test results of the secondary battery are shown in Table 1.

**Application examples 17 to 21:**

A composite current collector was prepared using the method in Example 1 of current collector preparation. The above composite current collector was assembled into a secondary battery through coating, cold pressing, die-cutting, slitting, winding, hot pressing, welding, housing, formation, and sealing processes.

The DCRperformance, tab temperature during charging at 2C, needle penetration performance, and energy density of the secondary battery were tested. The test method was the same as that of Application example 1.

The structural parameters of the composite current collector and the performance test results of the secondary battery are shown in Table 1.

**Application examples 22 to 23:**

The composite current collector was prepared using the same method as in Application example 6, but thickness of the second binding layer and thickness of the non-groove zone of the second binding layer in the composite current collector were different. The above composite current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested. The test method was the same as that of Application example 1.

The structural parameters of the composite current collector and the performance test results of the secondary battery are shown in Table 1.

**Application examples 24 to 29:**

The composite current collector was prepared using the same method as in Application example 1, but the thicknesses of the first body zone, the second body zone, the first tab zone, and the second tab zone in the composite current collector were different. The above composite current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested. The test method was the same as that of Application example 1.

The structural parameters of the composite current collector and the performance test results of the secondary battery are shown in Table 1.

**Application examples 30 to 32:**

A composite current collector was prepared using the method in Example 9 of current collector preparation. The above composite current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested. The test method was the same as that of application example 1.

The structural parameters of the composite current collector and the performance test results of the secondary battery are shown in Table 2.

iii. Application comparative examples

**Application comparative example 1:**

A pure aluminum foil metal current collector with a thickness of 13 $\mu$m was used. The current collector was assembled into a secondary battery through coating, cold pressing, die-cutting, slitting, winding, hot pressing, welding, housing, formation, and sealing processes.

The DCR performance, tab temperature during charging at 2C, needle penetration performance, and energy density of the secondary battery were tested. The test method was the same as that of Application example 1.

The structural parameters of the composite current collector and the performance test results of the secondary battery are shown in Table 2.

In Tables 1 and 2 below, depths of the grooves in the first tab zone and the second tab zone are A1 and A2, respectively, and widths of the grooves are both W1; width of the second binding layer is W1 and its depth is D1, where the widths of the grooves and the second binding layer are the same; width of the second binding layer at positions outside the groove is W11, and thickness of the second binding layer outside the groove is D11; widths of the first tab zone and the second tab zone are both W2 (W2 = 50 mm), thickness of the first tab zone is D3, and thickness of the second tab zone is D4; and thickness of the first body zone is D21, and thickness of the second body zone is D22.

**Table 1**

| No. | W1 (mm) | W11 (mm) | W1/W2 | D1 (μm) | D11 (μm) | A1/A2/A1+A2 (μm) | (D3+D4)/D1 | D21/D22/D21+D22 (μm) | D3/D4/D3+D4 (μm) | D3+D4-(D21+D22) (μm) | Cell DCR (mΩ) | Tab temperature during 2C charging of cell (°C) | Energy density of cell (Wh/L) | Needle penetration test passed? |
|---|---|---|---|---|---|---|---|---|---|---|---|---|---|---|
| Application example 1 | 2.5 | 0 | 5% | 2 | / | 1/1/2 | 5 | 1/1/2 | 5/5/10 | 8 | 1.45 | 42.2 | 516 | Yes |
| Application example 2 | 5 | 0 | 10% | 2 | / | 1/1/2 | 5 | 1/1/2 | 5/5/10 | 8 | 1.50 | 42.4 | 516 | Yes |
| Application example 3 | 15 | 0 | 30% | 2 | / | 1/1/2 | 5 | 1/1/2 | 5/5/10 | 8 | 1.55 | 42.3 | 515 | Yes |
| Application example 4 | 15 | 0 | 30% | 2 | / | 0/0/0 | 5 | 1/1/2 | 5/5/10 | 8 | 1.54 | 42.2 | 508 | Yes |
| Application example 5 | 25 | 0 | 50% | 2 | / | 1/1/2 | 5 | 1/1/2 | 5/5/10 | 8 | 1.58 | 43.1 | 514 | Yes |
| Application example 6 | 5 | 45 | 10% | 2 | 0.3 | 0.85/0.85/1.7 | 5 | 1/1/2 | 5/5/10 | 8 | 1.54 | 42.7 | 516 | Yes |
| Application example 7 | 5 | 25 | 10% | 2 | 0.3 | 0.85/0.85/1.7 | 5 | 1/1/2 | 5/5/10 | 8 | 1.52 | 42.5 | 516 | Yes |
| Application example 8 | 15 | 35 | 30% | 0.5 | 0.3 | 0.1/0.1/0.2 | 20 | 1/1/2 | 5/5/10 | 8 | 1.4 | 42.1 | 513 | Yes |
| Application example 9 | 15 | 35 | 30% | 0.5 | 0.3 | 0.2/0/0.2 | 20 | 1/1/2 | 9/1/10 | 8 | 1.42 | 42.2 | 513 | Yes |
| Application example 10 | 15 | 35 | 30% | 1 | 0.3 | 0.35/0.35/0.7 | 10 | 1/1/2 | 5/5/10 | 8 | 1.45 | 42.3 | 513 | Yes |
| Application example 11 | 15 | 35 | 30% | 2 | 0.3 | 0.85/0.85/1.7 | 5 | 1/1/2 | 5/5/10 | 8 | 1.52 | 42.4 | 513 | Yes |
| Application example 12 | 15 | 35 | 30% | 3 | 0.3 | 1.35/1.35/2.7 | 3.3 | 1/1/2 | 5/5/10 | 8 | 1.5 | 43.1 | 512 | Yes |
| Application example 13 | 15 | 35 | 30% | 4 | 0.3 | 1.85/1.85/3.7 | 2.5 | 1/1/2 | 5/5/10 | 8 | 1.58 | 43.2 | 512 | Yes |

| No. | W1 (mm) | W11 (mm) | W1/ W2 | D1 (μm) | D11 (μm) | A1/A2/A1+A2 (μm) | (D3+D4) /D1 | D21/D22/ D21+D22 (μm) | D3/D4/ D3+D4 (μm) | D3+D4-(D21+D22) (μm) | Cell DCR (mΩ) | Tab temperature during 2C charging of cell (°C) | Energy density of cell (Wh/L) | Needle penetration test passed? |
|---|---|---|---|---|---|---|---|---|---|---|---|---|---|---|
| Application example 14 | 15 | 35 | 30% | 5 | 0.3 | 2.35/2.35/4.7 | 2.0 | 1/1/2 | 5/5/10 | 8 | 1.55 | 43.3 | 512 | Yes |
| Application example 15 | 15 | 35 | 30% | 2 | 0.3 | 0.85/0.85/1.7 | 5 | 1/1/2 | 5/5/10 | 8 | 1.55 | 42.6 | 512 | Yes |
| Application example 16 | 15 | 35 | 30% | 2 | 0.5 | 0.75/0.75/1.5 | 5 | 1/1/2 | 5/5/10 | 8 | 1.57 | 42.8 | 512 | Yes |
| Application example 17 | 15 | 0 | 30% | 2 | / | 1/1/2 | 5 | 1/1/2 | 5/5/10 | 8 | 1.46 | 42.2 | 513 | Yes |
| Application example 18 | 15 | 0 | 30% | 2 | / | 1/1/2 | 7.5 | 1/1/2 | 5/10/15 | 13 | 1.43 | 42.0 | 499 | Yes |
| Application example 19 | 15 | 0 | 30% | 2 | / | 1/1/2 | 3.5 | 1/1/2 | 3.5/3.5/ 7 | 5 | 1.55 | 43.3 | 524 | Yes |
| Application example 20 | 0 | 0 | 0% | 2 | / | 1/1/2 | 5 | 1/1/2 | 5/5/10 | 8 | 2.08 | 54.5 | 512 | Yes |
| Application example 21 | 70 | 0 | 70% | 2 | / | 1/1/2 | 5 | 1/1/2 | 5/5/10 | 8 | 2.02 | 55.6 | 513 | Yes |
| Application example 22 | 15 | 35 | 30% | 8 | 0.3 | 3.85/3.85/7.7 | 1.25 | 1/1/2 | 5/5/10 | 8 | 2.15 | 56.3 | 511 | Yes |
| Application example 23 | 15 | 35 | 30% | 2 | 1 | 0.5/0.5/1 | 5 | 1/1/2 | 5/5/10 | 8 | 2.08 | 50.5 | 512 | Yes |
| Application example 24 | 15 | 0 | 30% | 2 | / | 1/1/2 | 13 | 1/1/2 | 13/13/2 6 | 24 | 1.42 | 42.6 | 478 | Yes |
| Application example 25 | 15 | 0 | 30% | 2 | / | 1/1/2 | 2.5 | 1/1/2 | 2.5/2.5/ 5 | 3 | 2.23 | 55.5 | 530 | Yes |
| Application example 26 | 15 | 0 | 30% | 2 | / | 1/1/2 | 5 | 2/2/4 | 5/5/10 | 6 | 1.43 | 42.1 | 501 | No |

(continued)

| No. | W1 (mm) | W11 (mm) | W1/ W2 | D1 (μm) | D11 (μm) | A1/A2/A1+A2 (μm) | (D3+D4) /D1 | D21/D22/ D21+D22 (μm) | D3/D4/ D3+D4 (μm) | D3+D4-(D21+D22) (μm) | Cell DCR (mΩ) | Tab temperature during 2C charging of cell (°C) | Energy density of cell (Wh/L) | Needle penetration test passed? |
|---|---|---|---|---|---|---|---|---|---|---|---|---|---|---|
| Application example 27 | 15 | 0 | 30% | 2 | / | 1/1/2 | 5 | 3/3/6 | 5/5/10 | 4 | 1.42 | 42.0 | 488 | No |
| Application example 28 | 15 | 0 | 30% | 2 | / | 1/1/2 | 5 | 4/4/8 | 5/5/10 | 2 | 1.41 | 42.1 | 478 | No |
| Application example 29 | 15 | 0 | 30% | 2 | / | 1/1/2 | 5 | 5/5/10 | 5/5/10 | 0 | 1.40 | 41.9 | 461 | No |

It can be learned from the foregoing application examples that:

In Application examples 1 to 5, when the ratio W1/W2 is controlled within the range of 5% to 50% (the width W1 is controlled within the range of 2.5 mm to 25 mm), the second binding layer can play the role of supporting the tabs, and furthermore, the metal layer in the region without the binding layer can be used as the main welding sites. This not only prevents damage to the tab roots during the processing, but also achieves good welding effects and conductivity, resulting in reduced DCR of the cell. The tab temperature during 2C high-rate charging remains within the normal range, thereby enhancing the performance and safety of the cell.

In Example 3, there are grooves in both the first tab zone and the second tab zone; and in Example 4, there are no groove in either the first tab zone or the second tab zone. In both examples, the second binding layer can play the role of supporting the tab roots, resulting in improved cell performance. However, in Example 4, as compared to Example 3, due to the absence of grooves in both the first tab zone and the second tab zone, the first binding layer in Example 4 needs to be thicker to ensure the connection between the first binding layer and the second binding layer, resulting in partial loss of energy density as compared to Example 3.

In Application examples 6 to 7, the second binding layer includes a thin portion (0.3 $\mu$m) outside the grooves, having a width W11 of 25 mm or 45 mm, which represents partial and full coverage of the non-groove zone, respectively. This makes the tab zone metal layer less susceptible to damage during processing, ensuring good DCR and tab temperature-rise performance during high-rate charging.

In Application example 20, when W1 and W1/W2 are 0, the lack of support at the tab roots leaves the tab roots prone to cracking during processing, ultimately reducing the conductivity of the tabs and the performance of the cell.

In Application example 21, when W1/W2 exceeds 50% and reaches 70%, the metal layer in the region without the binding layer is insufficient, reducing the directly weldable metal area, and during the welding process, most of the welding needs to be performed in the region containing the binding layer. This affects the welding effect, resulting in compromised current flow capacity, increased cell DCR, decreased current flow capacity of the cell, and elevated tab temperature during 2C charging.

In Application examples 8 to 14, thickness of the second binding layer in the grooves is controlled within the range of 0.5 $\mu$m to 5 $\mu$m, and the ratio of the sum of thicknesses of the first tab zone and the second tab zone to the thickness of the second binding layer in the grooves is in the range of 2 to 20, achieving good tab welding effect and normal cell DCR. However, in Application example 22, when the thickness of the second binding layer in the grooves exceeds 5 $\mu$m, and the ratio of the sum of thicknesses of the first tab zone and the second tab zone to the thickness of the second binding layer in the grooves is 1.25, the proportion of the metal layer at the roots of the first tab zone and the second tab zone is decreased, and the binding layer is too thick, resulting in that the binding layer is not able to be penetrated by the ultrasonic energy during welding. This weakens the conductivity of the upper and lower metal layers, resulting in decreased overall conductivity. Therefore, controlling thickness D1 of the second binding layer in the grooves within the range of 0.5 $\mu$m to 5 $\mu$m, and controlling (D3+D4)/D1 within the range of 2 to 20 can ensure good welding effect.

In Example 9, the first tab zone extends toward the second tab zone; in Example 8, the first tab zone extends toward the second tab zone and the second tab zone also extends toward the first tab zone. Both Examples 9 and 8 achieve good cell performance, indicating that both tab extension modes are viable.

In Example 8, both the first tab zone and second tab zone have a groove zone; while in Example 9, only the first tab zone has a groove zone. In both cases, good cell performance is achieved, indicating that the configuration of the groove zones can be diversified.

Comparison of Application examples 15 to 16 with Application example 23 shows that: when the second binding layer has a thickness ≤ 0.5 $\mu$m at the region outside the grooves, it plays the role of reinforcing the first tab zone and the second tab zones, enhancing processability, and the quite thin binding layer does not affect direct welding; however, when the second binding layer has a thickness > 0.5 $\mu$m, for example, up to 1 $\mu$m (as in Application example 23) at the region outside the grooves, it affects the conductivity of the upper and lower metal layers, impacting the conductivity performance of directly welded tabs. This leads to an increased DCR and higher temperature at the tabs during 2C high-rate charging, affecting the cell performance.

In Application examples 17 to 19, when the total thickness of the first tab zone and the second tab zones is 7 $\mu$m to 15 $\mu$m, and the difference between the total thickness of the first tab zone and the second tab zone and the total thickness of the first body zone and the second body zone (D3+D4)-(D21+D22) is within the range of 5 $\mu$m to 13 $\mu$m, good effect can be achieved, that is, the DCR of the cell is low, and the tab temperature rise is at a normal level. At this time, if the thickness D3+D4 is further increased, there is no significant improvement in DCR and fast charging temperature-rise performance, but it leads to a significant reduction in energy density (as in Application example 24, where D3+D4 is 26 $\mu$m). Therefore, considering energy density and cell performance, controlling the total thickness of the first tab zone and the second tab zone within the range of 7 $\mu$m to 15 $\mu$m achieves a good effect. The value of (D3+D4)-(D21+D22) being in the range of 5 $\mu$m to 13 $\mu$m can balance the current flow capacity of the tabs and the energy density of the cell.

In Application example 25, the total thickness D3+D4 is 5 $\mu$m. Although it is 3 $\mu$m thicker than (D21+D22), the tab zone has insufficient conductivity, resulting in an increase in cell DCR and higher tab temperature rise during 2C charging, posing a risk of cell failure.

In Application examples 26 to 29, when the total thickness (D21+D22) of the first body zone and the second body zone is within the range of 4 $\mu$m to 10 $\mu$m, the metal layer in the electrode plate zone is too thick so that the needle penetration test cannot be passed. This further indicates that the metal layer in the electrode plate zone should not be too thick, and controlling the thickness of the metal layers in the electrode plate zone and the tab zone within an appropriate range helps to improve both the safety and energy density of the cell.

Table 2

| No. | W1 (mm) | W1/W2 | Thickness D21 of metal layer in the second body zone ($\mu$m) | Thickness D1 of second binding layer ($\mu$m) | D21/D22/D21+D22 ($\mu$m) | D3/D4/D3+D4 ($\mu$m) | D3+D4-(D21+D22) | Cell DCR (m$\Omega$) | Tab temperature during 2C charging of cell (°C) | Energy density of cell (Wh/L) | Needle penetration test passed? |
|---|---|---|---|---|---|---|---|---|---|---|---|
| Application example 30 | 0 | 0 | 0.5 | 0 | 1/0.5/1.5 | 9/0.5/9.5 | 8 | 1.53 | 43.1 | 517 | Yes |
| Application example 31 | 0 | 0 | 0.8 | 0 | 1/0.8/1.8 | 9/0.8/9.8 | 8 | 1.48 | 42.8 | 515 | Yes |
| Application example 32 | 0 | 0 | 1 | 0 | 1/1/2 | 9/1/10 | 8 | 1.41 | 42.5 | 513 | Yes |
| Application comparative example 1 (aluminum foil) | / | / | / | / | / | / | / | 1.40 | 42.2 | 480 | No |

As can be seen from Table 2: in Application examples 30 to 32, the first body zone and the first tab zone are prepared by using a metal foil, and the second body zone and the second tab zone are prepared directly by metal vapor deposition, which results in a better connectivity between the metal in the first tab zone and the metal in the second tab zone, improved conductivity between the upper and lower metal layers, and a larger conduction area in the first tab zone and the second tab zone. As a result, good DCR performance and suppression of fast charging temperature rise are achieved. A metal layer thickness of 0.5 $\mu$m to 1 $\mu$m in the second body zone yields good cell DCR performance, with 2C charging temperature rise within a normal range, comparable to that of aluminum foil (as in Application comparative example 1). Moreover, this allows the cell to directly pass the needle penetration test while ensuring performance, enhancing the safety of the cell. In contrast, the aluminum foil group fails the needle penetration test (as in Application comparative example 1). This demonstrates the effectiveness of the current collector used in Application examples 30 to 32 in improving cell performance and safety.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. A composite current collector, comprising a first metal layer, a second metal layer, and a first binding layer, wherein the first metal layer comprises a first body zone and a first tab zone, the first tab zone being located at an end of the first metal layer; the second metal layer comprises a second body zone and a second tab zone, the second tab zone being located at an end of the second metal layer; the first body zone and the second body zone are connected through the first binding layer; the first tab zone has a thickness greater than thickness of the first body zone; and the first tab zone extends toward the second tab zone.

2. The composite current collector according to claim 1, wherein a first groove is provided at an end of the first tab zone extending toward the second tab zone, the first groove extending from one side of the first tab zone close to the first body zone to another side.

3. The composite current collector according to claim 2, wherein the second tab zone has a thickness greater than thickness of the second body zone and the second tab zone extends toward the first tab zone.

4. The composite current collector according to claim 3, wherein a second groove is provided at an end of the second tab zone extending toward the first tab zone, the second groove extending from one side of the second tab zone close to the second body zone to another side.

5. The composite current collector according to claim 4, wherein a second binding layer is provided between the first tab zone and the second tab zone, the second binding layer at least partially filling a gap between the first tab zone and the second tab zone.

6. The composite current collector according to claim 5, wherein the second binding layer has a thickness of 0.5 $\mu$m to 5 $\mu$m at the first groove and/or the second groove, and the second binding layer has a thickness of less than 0.5 $\mu$m at other parts; and
optionally, the second binding layer has a thickness of 0.5 $\mu$m to 3 $\mu$m at the first groove and/or the second groove.

7. The composite current collector according to claim 5 or 6, **characterized in that** a ratio of total thickness of the first tab zone and the second tab zone to thickness of the second binding layer at the first groove and/or the second groove is greater than or equal to 2; and
optionally, the ratio of the total thickness of the first tab zone and the second tab zone to the thickness of the second binding layer at the first groove and/or the second groove is 2 to 20.

8. The composite current collector according to any one of claims 5 to 7, **characterized in that** the composite current collector satisfies at least one of the following conditions (1) to (4):

(1) a ratio of width of the first groove to width of the first tab zone is 0.05 to 0.5;

(2) a ratio of width of the second binding layer at the first groove to width of the first tab zone is 0.05 to 0.5;

(3) a ratio of width of the second groove to width of the second tab zone is 0.05 to 0.5; or

(4) a ratio of width of the second binding layer at the second groove to width of the second tab zone is 0.05 to 0.5.

9. The composite current collector according to any one of claims 5 to 8, **characterized in that** the composite current collector satisfies at least one of the following conditions (5) to (8):

(5) the side of the second tab zone close to the second body zone is in contact with the first binding layer;

(6) the first tab zone is connected to the second tab zone;

(7) the second binding layer is connected to the first binding layer; or

(8) the side of the first tab zone close to the first body zone is in contact with the first binding layer.

10. The composite current collector according to any one of claims 1 to 9, **characterized in that** the first metal layer comprises a plurality of first body zones, the plurality of first body zones being spaced apart by third tab zones; the second metal layer comprises a plurality of second body zones, the plurality of second body zones being spaced apart by fourth tab zones; and the third tab zone has a thickness greater than thickness of the first body zone, and the third tab zone extends toward the fourth tab zone.

11. The composite current collector according to claim 10, **characterized in that** the composite current collector satisfies at least one of the following conditions (9) to (11):

(9) the fourth tab zone has a thickness greater than the thickness of the second body zone, and the fourth tab zone extends toward the third tab zone;

(10) a side wall of the fourth tab zone is in contact with the first binding layer; or

(11) the third tab zone is connected to the fourth tab zone.

12. The composite current collector according to claim 10 or 11, wherein the composite current collector satisfies at least one of the following conditions (12) to (14):

(12) a third binding layer is provided between the third tab zone and the fourth tab zone, the third binding layer at least partially filling a gap between the third tab zone and the fourth tab zone;

(13) the third binding layer is connected to the first binding layer; or

(14) a side wall of the third tab zone is in contact with the first binding layer.

13. The composite current collector according to claim 12, **characterized in that** the third binding layer has a thickness of 0.5 $\mu$m to 5 $\mu$m; and

optionally, the third binding layer has a thickness of 0.5 $\mu$m to 3 $\mu$m.

14. The composite current collector according to any one of claims 1 to 13, **characterized in that** a sum of thicknesses of the first tab zone and the second tab zone is greater than or equal to 7 $\mu$m; and

optionally, the sum of thicknesses of the first tab zone and the second tab zone is 7 $\mu$m to 15 $\mu$m.

15. The composite current collector according to any one of claims 10 to 13, **characterized in that** a sum of thicknesses of the third tab zone and the fourth tab zone is greater than or equal to 7 $\mu$m; and

optionally, the sum of thicknesses of the third tab zone and the fourth tab zone is 7 $\mu$m to 15 $\mu$m.

16. The composite current collector according to any one of claims 1 to 15, **characterized in that** the sum of thicknesses of the first tab zone and the second tab zone is 5 $\mu$m to 13 $\mu$m greater than a sum of thicknesses of the first body zone and the second body zone.

17. The composite current collector according to any one of claims 10 to 13 and 15, wherein the sum of thicknesses of the third tab zone and the fourth tab zone is 5 $\mu$m to 13 $\mu$m greater than the sum of thicknesses of the first body zone and the second body zone.

18. The composite current collector according to any one of claims 1 to 17, **characterized in that** the first binding layer comprises a binder and one or more of a particulate material and a conductive agent.

19. The composite current collector according to claim 18, **characterized in that** the composite current collector satisfies at least one of the following conditions (15) to (18):

(15) the particulate material comprises one or more of inorganic compound particles and metal particles;

(16) the conductive agent comprises one or more of carbon nanotubes, conductive carbon, graphene, and conductive polymers;

(17) a sum of the mass percentages of the particulate material and conductive agent in the first binding layer is 20% to 70%; and

(18) the binder comprises one or more of polyamide, polyimide, polyethylene terephthalate, polybutylene terephthalate, polyethylene naphthalate, polycarbonate, polyethylene, carboxylic acid and its derivative graft polyethylene, polypropylene, carboxylic acid and its derivative graft polypropylene, polypropylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polymethyl methacrylate, polyethylene glycol, polysulfide nitride, polyphenylene, polypyrrole, polyaniline, polythiophene, polypyridine, cellulose, starch, protein, epoxy resin, polypyrrole, polythiophene, polyaniline, and phenolic resin.

20. A secondary battery, comprising the composite current collector according to any one of claims 1 to 19.

21. An electric apparatus, comprising the secondary battery according to claim 20.

FIG. 1

FIG. 2

100

FIG. 3

100

FIG. 4

FIG. 5

FIG. 6

100

FIG. 7

100

FIG. 8

100

FIG. 9

100

FIG. 10

FIG. 11

FIG. 12

FIG. 13

100

2

1

FIG. 14

5

FIG. 15

<u>5</u>

53

52
52

51

FIG. 16

<u>6</u>

FIG. 17

<div align="center">

**INTERNATIONAL SEARCH REPORT**

</div>

| | International application No. |
|---|---|
| | **PCT/CN2023/072363** |

**A.    CLASSIFICATION OF SUBJECT MATTER**

H01M4/66(2006.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 集流, 集电, 绝缘, 金属, 极耳, 焊接, 厚, batter+, cell?, current, collector?, insulat+, metal, tab?, weld+, solder+, thickness

**C.    DOCUMENTS CONSIDERED TO BE RELEVANT**

| Category* | Citation of document, with indication, where appropriate, of the relevant passages | Relevant to claim No. |
|---|---|---|
| X | CN 113066986 A (ZHUHAI COSMX BATTERY CO., LTD.) 02 July 2021 (2021-07-02) description, paragraphs 23-55 and 66-76, and figures 1-4 | 1, 10-11, 14-17, 20-21 |
| X | CN 112259742 A (SHANGHAI LANJUN NEW ENERGY TECHNOLOGY CO., LTD.) 22 January 2021 (2021-01-22) description, paragraphs 35-64, and figures 1-3 | 1, 10-11, 14-17, 20-21 |
| Y | CN 113066986 A (ZHUHAI COSMX BATTERY CO., LTD.) 02 July 2021 (2021-07-02) description, paragraphs 23-55 and 66-76, and figures 1-4 | 2-9, 12-13, 18-19 |
| Y | CN 112259742 A (SHANGHAI LANJUN NEW ENERGY TECHNOLOGY CO., LTD.) 22 January 2021 (2021-01-22) description, paragraphs 35-64, and figures 1-3 | 2-9, 12-13, 18-19 |
| Y | CN 215377445 U (JIANGSU ZHUOGAO NEW MATERIAL TECHNOLOGY CO., LTD.) 31 December 2021 (2021-12-31) description, paragraphs 40-54, and figures 1-6 | 2-9, 12-13 |
| Y | CN 113314696 A (OPPO GUANGDONG MOBILE TELECOMMUNICATIONS CO., LTD.) 27 August 2021 (2021-08-27) description, paragraphs 40-53, and figures 1-12 | 18-19 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 September 2023** | **15 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/072363**

**C.    DOCUMENTS CONSIDERED TO BE RELEVANT**

| Category* | Citation of document, with indication, where appropriate, of the relevant passages | Relevant to claim No. |
|---|---|---|
| A | CN 111933953 A (JIANGSU TAFEL NEW ENERGY TECHNOLOGY CO., LTD. et al.) 13 November 2020 (2020-11-13)<br>        entire document | 1-21 |
| A | CN 217847998 U (ENVISION POWER TECHNOLOGY (JIANGSU) CO., LTD. et al.) 18 November 2022 (2022-11-18)<br>        entire document | 1-21 |
| A | WO 2021238642 A1 (ZHUHAI COSMX BATTERY CO., LTD.) 02 December 2021 (2021-12-02)<br>        entire document | 1-21 |

Form PCT/ISA/210 (second sheet) (July 2022)

**INTERNATIONAL SEARCH REPORT**
Information on patent family members

International application No.

**PCT/CN2023/072363**

| Patent document cited in search report | | | Publication date (day/month/year) | Patent family member(s) | | | Publication date (day/month/year) |
|---|---|---|---|---|---|---|---|
| CN | 113066986 | A | 02 July 2021 | WO | 2022194222 | A1 | 22 September 2022 |
| CN | 112259742 | A | 22 January 2021 | | None | | |
| CN | 215377445 | U | 31 December 2021 | CN | 112234210 | A | 15 January 2021 |
| | | | | WO | 2022068207 | A1 | 07 April 2022 |
| CN | 113314696 | A | 27 August 2021 | WO | 2022242255 | A1 | 24 November 2022 |
| CN | 111933953 | A | 13 November 2020 | CN | 212461732 | U | 02 February 2021 |
| | | | | WO | 2022037092 | A1 | 24 February 2022 |
| | | | | EP | 4148835 | A1 | 15 March 2023 |
| | | | | US | 2023163313 | A1 | 25 May 2023 |
| CN | 217847998 | U | 18 November 2022 | | None | | |
| WO | 2021238642 | A1 | 02 December 2021 | EP | 4131514 | A1 | 08 February 2023 |
| | | | | CN | 111509233 | A | 07 August 2020 |

Form PCT/ISA/210 (patent family annex) (July 2022)